# EUROPÄISCHE PATENTSCHRIFT

(11) **EP 3 283 495 B1**
(45) Veröffentlichungstag und Bekanntmachung des Hinweises auf die Patenterteilung: **26.08.2020**
(21) Anmeldenummer: 16718293.0
(22) Anmeldetag: 14.04.2016
(51) Int. Cl.: C07F 9/165, C07F 9/40, C08G 59/24, C08G 59/40, C08G 59/68, C09K 21/12

(54) **HÄRTER UND HÄRTUNGSBESCHLEUNIGER MIT FLAMMSCHUTZWIRKUNG ZUR HÄRTUNG VON EPOXIDHARZEN (II)**
HARDENER AND CURE ACCELERANT WITH FLAME RETARDANCY EFFECT FOR CURING EPOXY RESINS (II)
DURCISSEURS ET ACCÉLÉRATEURS DE DURCISSEMENT À EFFET IGNIFUGE POUR LE DURCISSEMENT DE RÉSINES ÉPOXY (II)

(30) Priorität: 17.04.2015 DE 102015004955
(43) Veröffentlichungstag der Anmeldung: 21.02.2018
(73) Patentinhaber: AlzChem Trostberg GmbH, 83308 Trostberg (DE)
(72) Erfinder: EIßMANN, Frank, 83342 Tacherting (DE); EBNER, Martin, 86438 Kissing (DE); KRIMMER, Hans-Peter, 84558 Kirchweidach (DE); KRAMMER, Doris, 83361 Kienberg (DE)
(74) Vertreter: Weickmann & Weickmann PartmbB
(86) Internationale Anmeldenummer: PCT/EP2016/058249
(87) Internationale Veröffentlichungsnummer: WO 2016/166229

(56) Entgegenhaltungen:
- EP-A1- 2 036 911
- DATABASE CAPLUS [Online] CHEMICAL ABSTRACTS SERVICE, COLUMBUS, OHIO, US; 2012, XP002758451, Database accession no. 2012:1333108

## Beschreibung

Die vorliegende Erfindung betrifft neuartige Härter und Härtungsbeschleuniger zur Härtung und beschleunigten Härtung von Epoxidharzen sowie Epoxidharz-Zusammensetzungen umfassend diese Härter oder Härtungsbeschleuniger.

Die Verwendung von duroplastischen Epoxidharzen ist aufgrund ihrer guten Chemikalienbeständigkeit, ihrer sehr guten thermischen und dynamisch-mechanischen Eigenschaften sowie ihres hohen elektrischen Isolationsvermögens weit verbreitet. Darüber hinaus zeigen Epoxidharze eine gute Haftung auf vielen Substraten und sind somit bestens für den Einsatz in Faserverbundwerkstoffen (Composites) und als Klebstoffe geeignet.

Die Härtung von Epoxidharzen verläuft nach unterschiedlichen Mechanismen. Neben der Härtung mit Phenolen oder Anhydriden wird häufig die Härtung mit Aminen durchgeführt. Diese Stoffe sind meist flüssig und lassen sich sehr gut mit Epoxidharzen vermengen. Aufgrund der hohen Reaktivität und damit sehr niedrigen Latenz werden derartige Epoxidharz-Zusammensetzungen zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. Hierbei bedeutet "latent", dass eine Mischung der Einzelkomponenten, nämlich der A-Komponente und der B-Komponente, unter definierten Lagerbedingungen stabil vorliegt. Diese zweikomponentigen Harzformulierungen werden auch als sogenannte kalthärtende Harzformulierungen bezeichnet, wobei die dafür verwendeten Härter meist aus der Gruppe der Amine oder Amidoamine gewählt werden.

Einkomponentige, heißhärtende Epoxidharzformulierungen sind hingegen gebrauchsfähig fertig vorkonfektioniert, das heißt, dass Epoxidharz und Härter werkseitig vermischt vorliegen. Mischungsfehler der Einzelkomponenten bei Gebrauch vor Ort sind daher ausgeschlossen. Voraussetzung dafür bilden latente Härtersysteme, welche bei Raumtemperatur mit dem Epoxidharz nicht reagieren (lagerfähig sind), jedoch unter Erwärmung je nach Energieeintrag bereitwillig ausreagieren. Für solche einkomponentigen Epoxidharz-Formulierungen ist beispielsweise Dicyandiamid ein besonders geeigneter und auch kostengünstiger Härter. Unter Umgebungsbedingungen können entsprechende Harz-Härter-Mischungen bis zu zwölf (12) Monate gebrauchsfähig gelagert werden.

Aufgrund der weiten Anwendbarkeit von Epoxidharzen, insbesondere auch als Oberflächenschicht, verdichten sich nicht nur seitens der legislativen Organe Anfragen zur Sicherheit der aus oder mit den Epoxidharzen hergestellten Produkte. So ist insbesondere die Forderung der Flammhemmung oder Flammschutzwirkung der Epoxidharze in das besondere Interesse der Anwender gerückt. In vielen Bereichen kommt dieser Forderung aufgrund der Gefährdung von Menschen und Sachwerten erste Priorität zu. In diesem Zusammenhang sind beispielsweise Konstruktionswerkstoffe für den Flugzeug-, Schiff-, Kraftfahrzeug- und Schienenfahrzeugbau zu nennen, aber auch Oberflächenversiegelungen von Werkstoffen, die einer hohen Hitzebelastung ausgesetzt sind, wie beispielsweise Vergussmassen von Leiterplatten oder Wicklungen von Elektromotoren.

Zur Beurteilung des Brennverhaltens müssen die Werkstoffe je nach Einsatzgebiet unterschiedlichste Materialprüfungen bestehen. Im Wesentlichen wird hierbei die Brennbarkeit unter Normalatmosphäre (ca. 21 % Sauerstoff), die Flammlöschung aber auch das Rauchverhalten untersucht. Die mit diesen Materialprüfungen zu überprüfenden Forderungen sind nur schwer zu erfüllen. Viele bekannte im technischen Einsatz befindliche flammhemmende oder flammwidrige Epoxidharzwerkstoffe enthalten deshalb bis zu 20 % Brom in Form von bromierten Harzkomponenten. Oft werden zusätzlich erhebliche Mengen an Metallen, beispielsweise in Form von Antimontrioxid oder Aluminiumhydroxid, als synergistisch wirkendes Flammschutzmittel eingesetzt. Die Problematik bei diesen Verbindungen besteht darin, dass sie einerseits zwar als Flammschutzmittel hervorragend wirksam sind, andererseits jedoch als umweltschädlich oder gesundheitsschädlich für den Menschen einzustufen sind. Zudem bereitet die Entsorgung von bromhaltigen Altwerkstoffen zunehmend erhebliche Probleme.

Aus diesen Gründen hat es nicht an Versuchen gefehlt, bromhaltige Flammschutzmittel durch weniger problematische Substanzen zu ersetzen. Als Alternativen für halogenhaltige Flammschutzmittel sind beispielsweise salzartige Flammschutzmittel, wie insbesondere Melaminphosphat, und phosphorhaltige Flammschutzmittel, insbesondere auf Basis von 9,10-Dihydro-9-oxa-10-phosphaphenanthren-10-oxid (DOPO) und Derivate hiervon, zu nennen (vgl. auch M. Rakotomalala, S. Wagner und M. Döring, Materials 2010, 3, 4300-4327).

Mit JP 2012-177777 A werden fotosensitive Zusammensetzungen beschrieben, die ein flammhemmendes Mittel, ein Urethanharz und einen Photopolymerisationsinitiator sowie ggf. auch eine polymerisierbare Verbindung und ein Hitzevernetzungsmittel umfassen. Als flammhemmende Mittel können aromatische Phosphonatverbindungen eingesetzt werden, die mindestens eine Harnstoffgruppe umfassen können.

US 3,383,194 beschreibt herbizide Zusammensetzungen umfassend die Verbindung O,O-Dimethyl-O-[m-(3,3-dimethylureido)phenyl]phosphorthioat.
DE 20 13 666 beschreibt die Herstellung von Phosphorsäure und Phosphorsäure-Estern, darunter O,O-Diethyl-O-[m-(3,3-dimethylureido)phenyl]phosphat. Den Verbindungen wird eine pestizide Wirkung zugeschrieben

Weiterhin wurden auch reaktive organische Phosphorverbindungen, wie epoxidgruppenhaltige Phosphorverbindungen, zur flammhemmenden Einstellung von Epoxidharzen vorgeschlagen. Aus der europäischen Patentanmeldung EP 384 940 A1 sind Epoxidharzmischungen für den Einsatz in Leiterplattenmaterialien bekannt, die ein phosphorfreies Polyepoxidharz in Kombination mit einer epoxidgruppenhaltigen Phosphorverbindung und einem speziellen aromatischen Polyamin in Form eines Isocyanursäurederivates als Härter enthalten.

Aus den deutschen Offenlegungsschriften DE 43 08 184 A1 und der DE 43 08 187 A1 sind auch Epoxidharzmischungen bekannt, die ein phosphormodifiziertes Epoxidharz mit einem Epoxidwert von 0,02 bis 1 mol/100 g in Kombination mit dem oben genannten Polyamin enthalten. Die phosphormodifizierten Epoxidharze sind dabei aus Struktureinheiten aufgebaut, die sich einerseits von Polyepoxidverbindungen mit mindestens zwei Epoxidgruppen pro Molekül und andererseits von Phosphin-, Phosphon- und Pyrophosphonsäuren oder Phosphonsäurehalbestern bzw. von Phosphin- und Phosphonsäureanhydriden ableiten.

Weitere Epoxidharzmischungen zur Herstellung von Prepregs oder Verbundwerkstoffen, die phosphormodifizierte Epoxidharze, aromatische Amine als Härter und mindestens einen Härtungsbeschleuniger enthalten, sind aus den internationalen Patentanmeldungen WO 96/07685 A1 und WO 96/07686 A1 bekannt.

Es hat auch nicht an Versuchen gefehlt, auf der Basis von Phosphorkomponenten Gießharze zu entwickeln. So sind beispielsweise anhydridisch härtbare Epoxidgießharze bekannt, die Phosphonsäureanhydrid als Härter enthalten oder durch Modifizierung von Epoxidharz- bzw. Härterkomponenten mit Phosphorverbindungen erhalten werden (vgl. DE 42 37 132 C1, DE 195 06 010 A1). Diese Gießharze sind vorwiegend hochviskos und ohne Lösemittel erst bei Temperaturen >60 °C verarbeitbar; für die Härtung werden Temperaturen von >80 °C benötigt.

Weiterhin sind mit der internationalen Patentanmeldung WO 2009/0077796 A1 Phosphorsäureamide bekannt, die in Epoxidharzen eingesetzt werden können.

Auch wenn bis in die jüngste Vergangenheit erhebliche Fortschritte auf dem Feld von halogenfreien Flammschutzmitteln erzielt wurden, die in Epoxidharzen eingesetzt werden können, sind bis heute keine halogenfreien Härter oder Härtungsbeschleuniger zur Härtung von Epoxidharzen bekannt, die als integraler Bestanteil des Polymernetzwerks des ausgehärteten Epoxidharzes eine Flammschutzwirkung ausüben.

Der vorliegenden Erfindung liegt daher die Aufgabe zugrunde, neuartige Verbindungen bereitzustellen, die zur Härtung von Epoxidharzen sowie Epoxidharz-Zusammensetzungen, insbesondere als Härter und/oder Härtungsbeschleuniger eingesetzt werden können, und die nachdem sie in Epoxidharz-Zusammensetzungen eingearbeitet wurden, zusätzlich eine Flammschutzwirkung bereitstellen, so dass die aus oder mit der Epoxidharz-Zusammensetzung hergestellten Produkte als flammhemmend oder flammschützend eingestuft werden können. Hierbei besteht weiterhin die Notwendigkeit solche Härter und Härtungsbeschleuniger mit Flammschutzwirkung bereitzustellen, die als latent eingestuft werden können und somit eine hohe Lagerstabilität in Epoxidharzen unterhalb der Härtungstemperatur sowie eine hohe Reaktivität bei der Härtungstemperatur aufweisen, um eine vollständige Vernetzung des Epoxidharzes zu ermöglichen.

Gelöst werden diese Aufgaben durch einen Härter gemäß Anspruch 1 und einen Härtungsbeschleuniger gemäß Anspruch 2. Vorteilhafte Ausführungsformen der Erfindung sind in den Unteransprüchen angegeben, die wahlweise miteinander kombiniert werden können.

Demnach ist gemäß einer ersten Ausführungsform ein Härter zur Härtung von Epoxidharzen umfassend mindestens eine Verbindung aus der Gruppe der Ester phosphorhaltiger Säuren gemäß Formel (I) Gegenstand der vorliegenden Erfindung, wobei für Formel (I) gilt: 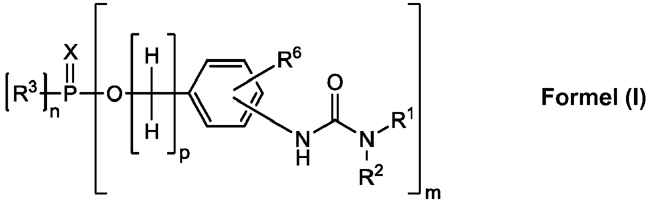 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2.

Gemäß einer zweiten Ausführungsform ist auch ein Härtungsbeschleuniger zur beschleunigten Härtung von Epoxidharzen umfassend mindestens eine Verbindung aus der Gruppe der Ester phosphorhaltiger Säuren gemäß Formel (I) Gegenstand der vorliegenden Erfindung, wobei für Formel (I) gilt: 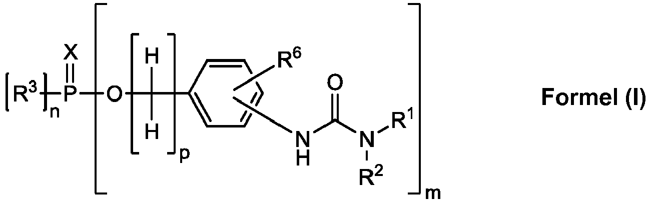 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2.

Bevorzugt werden dabei Härter und Härtungsbeschleuniger umfassend jeweils mindestens eine Verbindung aus der Gruppe der Ester phosphorhaltiger Säuren gemäß Formel (I), für deren Index p gilt:
p = 0 oder 1, insbesondere 0.

Somit werden gemäß der vorliegenden Erfindung ein Härter und/oder ein Härtungsbeschleuniger umfassend jeweils mindestens eine Verbindung aus der Gruppe der Ester phosphorhaltiger Säuren gemäß Formel (la) bevorzugt, wobei für Formel (la) gilt 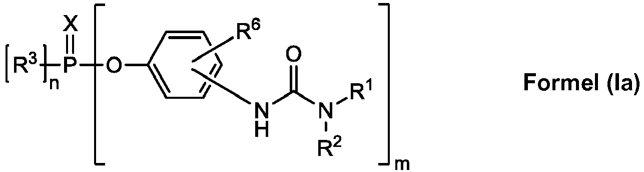 wobei für deren Reste R¹, R², R³, R⁶, X und Indizes m, n, gleichzeitig oder unabhängig voneinander gilt:
R¹, R² = gleichzeitig oder unabhängig voneinander Alkyl,
R³ = Alkyl, Aryl, -O-Aryl, -O-Alkylaryl oder -O-Arylalkyl,
R⁶ = Wasserstoff, Alkyl oder -NHC(O)NR¹R²,
X = Schwefel oder Sauerstoff,
m = 1, 2 oder 3,
   n = 0, 1 oder 2, wobei gilt: m + n = 3.

Des Weiteren werden Härter und Härtungsbeschleuniger umfassend jeweils mindestens eine Verbindung aus der Gruppe der Ester phosphorhaltiger Säuren gemäß Formel (I) oder Formel (la) bevorzugt, für deren Reste R³ gilt:
R³ = Aryl, -O-Aryl oder-O-Alkylaryl.

Weiterhin bevorzugt werden Härter und Härtungsbeschleuniger umfassend jeweils mindestens eine Verbindung aus der Gruppe der Ester phosphorhaltiger Säuren gemäß Formel (I) oder Formel (la), für deren Reste R⁶ gilt:
R⁶ = Wasserstoff oder Alkyl.

Weiterhin bevorzugt werden Härter und Härtungsbeschleuniger umfassend jeweils mindestens eine Verbindung aus der Gruppe der Ester phosphorhaltiger Säuren gemäß Formel (I) oder Formel (la), für deren Rest X gilt:
X = Sauerstoff.

Weiterhin bevorzugt werden dabei Härter und Härtungsbeschleuniger umfassend jeweils mindestens eine Verbindung aus der Gruppe der Ester phosphorhaltiger Säuren gemäß Formel (I) oder Formel (la), für deren Reste R¹, R² gleichzeitig oder unabhängig voneinander gilt:
R¹, R² = gleichzeitig oder unabhängig voneinander Alkyl, insbesondere gleichzeitig oder unabhängig voneinander Methyl oder Ethyl, insbesondere gleichzeitig Methyl oder Ethyl.

Ganz besonders bevorzugt werden Härter und Härtungsbeschleuniger umfassend jeweils mindestens eine Verbindung aus der Gruppe der Ester phosphorhaltiger Säuren gemäß Formel (I), für deren Reste R¹, R², R⁶, X und Indizes m, n, p in Formel (I) gleichzeitig oder unabhängig voneinander gilt:
R¹, R² = gleichzeitig oder unabhängig voneinander Methyl oder Ethyl,
R³ = Aryl, -O-Aryl oder -O-Alkylaryl,
R⁶ = Wasserstoff oder Alkyl,
X = Schwefel oder Sauerstoff,
m = 1, 2 oder 3,
n = 0, 1 oder 2, wobei gilt: m + n = 3
p = 0.

Ganz besonders bevorzugt werden Härter und Härtungsbeschleuniger umfassend jeweils mindestens eine Verbindung aus der Gruppe der Ester phosphorhaltiger Säuren gemäß Formel (Ia), für deren Reste R¹, R², R⁶, X und Indizes m, n in Formel (Ia) gleichzeitig oder unabhängig voneinander gilt:
R¹, R² = gleichzeitig oder unabhängig voneinander Methyl oder Ethyl,
R³ = Aryl, -O-Aryl oder-O-Alkylaryl,
R⁶ = Wasserstoff oder Alkyl,
X = Schwefel oder Sauerstoff,
m = 1, 2 oder 3,
n = 0, 1 oder 2, wobei gilt: m + n = 3.

Gemäß der vorliegenden Erfindung bedeutet Alkyl dabei ein linearer oder verzweigter, einwertiger Rest, der die allgemeine Formel CₙH₂ₙ₊₁ aufweist, wobei n die Anzahl der Kohlenstoffatome des Restes wiedergibt und n insbesondere eine Zahl von 1 bis 10, bevorzugt 1 bis 5, besonders bevorzugt 1 oder 2 bedeutet. Somit kann Alkyl gemäß der vorliegenden Erfindung insbesondere Methyl, Ethyl, n-Propyl, n-Butyl, n-Pentyl, n-Hexyl, n-Heptyl, n-Octyl, n-Nonyl, n-Decyl, 1-Methylethyl,
1-Methylpropyl, 1-Methylbutyl, 1-Methylpentyl, 1-Methylhexyl, 1-Methylheptyl, 1-Methyloctyl, 1-Methylnonyl, 1-Ethylpropyl, 1-Ethylbutyl, 1-Ethylpentyl, 1-Ethylhexyl, 1-Ethylheptyl, 1-Ethyloctyl, 2-Methylpropyl, 2-Methylbutyl, 2-Methylpentyl, 2-Methylhexyl, 2-Methylheptyl, 2-Methyloctyl, 2-Methylnonyl, 2-Ethylbutyl, 2-Ethylpentyl, 2-Ethylhexyl, 2-Ethylheptyl, 2-Ethyloctyl, 1,1-Dimethylethyl, 1,1-Dimethylpropyl, 1,1-Dimethylbutyl, 1,1-Dimethylpentyl, 1,1-Dimethylhexyl, 1,1-Dimethylheptyl, 1,1-Dimethyloctyl, 1,2-Dimethylpropyl, 1,2-Dimethylbutyl, 1,2-Dimethylpentyl, 1,2-Dimethylhexyl, 1,2-Dimethylheptyl, 1,2-Dimethyloctyl, 2-Ethyl-1-methylbutyl, 2-Ethyl-1-methylpentyl, 2-Ethyl-1-methylhexyl, 2-Ethyl-1-methylheptyl, 1-Ethyl-2-methylpropyl, 1-Ethyl-2-methylbutyl, 1-Ethyl-2-methylpentyl, 1-Ethyl-2-methylhexyl oder 1-Ethyl-2-methylheptyl bedeuten.

Gemäß der vorliegenden Erfindung bedeutet Alkyl besonders bevorzugt Methyl, Ethyl, 1-Methylethyl, n-Propyl, n-Butyl, 2-Methylbutyl oder 1,1-Dimethylethyl. Ganz besonders bevorzugt bedeutet Alkyl gemäß der vorliegenden Erfindung Methyl oder Ethyl.

Gemäß der vorliegenden Erfindung bedeutet Aryl ein einwertiger aromatischer Rest mit insbesondere 3 bis 20 Kohlenstoffatomen, bevorzugt 6 bis 20 Kohlenstoffatomen, besonders bevorzugt 6 Kohlenstoffatomen, der monocyclisch, bicyclisch oder polycyclisch sein kann. Somit kann Aryl gemäß der vorliegenden Erfindung insbesondere Phenyl, Naphthyl, Anthryl, Phenantryl, Pyrenyl oder Perylenyl bedeuten.

Gemäß der vorliegenden Erfindung bedeutet Aryl besonders bevorzugt Phenyl.

Gemäß der vorliegenden Erfindung bedeutet Alkylaryl ein Aryl-Rest der oben wiedergegebenen Beutung mit insbesondere 3 bis 20 Kohlenstoffatomen, der seinerseits einfach oder mehrfach mit einem Alkyl-Rest der oben wiedergegebenen Bedeutung mit insbesondere 1 bis 10 Kohlenstoffatomen substituiert ist, wobei die Bindung des Alkylarylrestes zu dem Grundgerüst an dem aromatischen Kern lokalisiert ist. Somit kann Alkylaryl gemäß der vorliegenden Erfindung insbesondere Tolyl, Xylyl, Pseudocumyl oder Mesityl bedeuten.

Gemäß der vorliegenden Erfindung bedeutet Alkylaryl besonders bevorzugt Tolyl.

Gemäß der vorliegenden Erfindung bedeutet Arylalkyl ein Alkyl-Rest der oben wiedergegebenen Bedeutung, der mit einem Aryl-Rest der oben wiedergegebenen Bedeutung substituiert ist, wobei die Bindung des Arylalkylrestes zu dem Grundgerüst an dem Alkylrest lokalisiert ist. Somit kann Arylalkyl gemäß der vorliegenden Erfindung insbesondere Benzyl, 1-Phenylethyl oder 1-Methyl-1-phenylethyl bedeuten.

Gemäß der vorliegenden Erfindung bedeutet Arylalkyl besonders bevorzugt Benzyl.

Gemäß der vorliegenden Erfindung bedeutet -NHC(O)NR¹R² ein Carbamoylamino-Rest, der am Carbamoyl-Stickstoff mit den Resten R¹ und R² substituiert ist, wobei R¹ und R² die oben wiedergegebenen Bedeutungen aufweisen, und der über den Amino-Stickstoff an das Grundgerüst gebunden ist.

Gemäß der vorliegenden Erfindung bedeutet -NHC(O)NR¹R² besonders bevorzugt (Dimethylcarbamoyl)amino.

Gemäß der vorliegenden Erfindung bedeutet -O-Alkyl ein Alkoxy-Rest, wobei dieser Alkoxy-Rest über den Sauerstoff an das Grundgerüst gebunden ist, und wobei Alkyl ansonsten die oben wiedergegebene Bedeutung aufweist. Somit kann -O-Alkyl insbesondere Methoxy, Ethoxy, n-Propoxy oder 1-Methylethoxy bedeuten.

Gemäß der vorliegenden Erfindung bedeutet -O-Alkyl besonders bevorzugt Methoxy oder Ethoxy.

Gemäß der vorliegenden Erfindung bedeutet -O-Aryl ein Aryloxy-Rest, wobei dieser Aryloxy-Rest über den Sauerstoff an das Grundgerüst gebunden ist, und wobei Aryl ansonsten die oben wiedergegebene Bedeutung aufweist. Somit kann -O-Aryl insbesondere Phenoxy oder Naphthoxy bedeuten.

Gemäß der vorliegenden Erfindung bedeutet -O-Aryl besonders bevorzugt Phenoxy.

Gemäß der vorliegenden Erfindung bedeutet -O-Alkylaryl ein Alkylaryloxy-Rest, wobei dieser Alkylaryloxy-Rest über den Sauerstoff an das Grundgerüst gebunden ist, und wobei die Bindung des Alkylaryl-Restes zu dem Sauerstoff an dem aromatischen Kern des Alkylaryl-Restes lokalisiert ist, und wobei Alkylaryl ansonsten die oben wiedergegebene Bedeutung aufweist. Somit kann -O-Alkylaryl insbesondere Tolyloxy oder Xylyloxy bedeuten.

Gemäß der vorliegenden Erfindung bedeutet -O-Alkylaryl besonders bevorzugt Tolyloxy.

Gemäß der vorliegenden Erfindung bedeutet -O-Arylalkyl ein Arylalkoxy-Rest, wobei dieser Arylalkoxy-Rest über den Sauerstoff an das Grundgerüst gebunden ist, und wobei die Bindung des Arylalkyl-Restes zu dem Sauerstoff an dem Alkyl-Rest des Arylalkyl-Restes lokalisiert ist, und wobei Arylalkyl ansonsten die oben wiedergegebene Bedeutung aufweist. Somit kann -O-Arylalkyl insbesondere Benzyloxy bedeuten.

Gemäß der vorliegenden Erfindung bedeutet -O-Arylalkyl besonders bevorzugt Benzyloxy.

Experimentelle Untersuchungen haben gezeigt, dass diese Verbindungen aus der Gruppe der Ester phosphorhaltiger Säuren hervorragend zur Härtung von Epoxidharzen einsetzbar sind. In weitergehenden Untersuchungen hat sich zudem herausgestellt, dass diese Verbindungen als Härter zur Härtung von Epoxidharzen sowie auch als Härtungsbeschleuniger zur beschleunigten Härtung von Epoxidharzen, die beispielsweise mit einem üblichen Dicyandiamid-Härter gehärtet werden, eingesetzt werden können. So hat sich vollkommend überraschend herausgestellt, dass die erfindungsgemäßen Verbindungen unabhängig voneinander sowohl als Härter als auch als Härtungsbeschleuniger in Kombination mit bekannten Härtern einsetzbar sind. Die somit bereitgestellten Verbindungen reagieren als Härter oder Härtungsbeschleuniger mit dem auszuhärtenden Epoxidharz und werden somit Bestandteil des Polymernetzwerkes des ausgehärteten Epoxidharzes.

So sind gemäß der vorliegenden Erfindung abhängig von dem Rest X, den Indizes m und n und der Art des Restes R³ insbesondere Härter und Härtungsbeschleuniger Gegenstand der vorliegenden Erfindung, die jeweils mindestens eine Verbindung ausgewählt aus der Gruppe der Phosphorsäureester und Thiophosphorsäureester gemäß Formel (I), oder jeweils mindestens eine Verbindung ausgewählt aus der Gruppe der Phosphonate und Thiophosphonate (Ester von Organophosphorverbindungen der Phosphonsäure bzw. deren Thioderivate) gemäß Formel (I), oder jeweils mindestens eine Verbindung ausgewählt aus der Gruppe der Phosphinate und Thiophosphinate (Ester von Organophosphorverbindungen der Phosphinsäure bzw. deren Thioderivate) gemäß Formel (I), umfassen.

Bevorzugt gemäß der vorliegenden Erfindung sind Phosphorsäureester und Thiophosphorsäureester. Somit sind gemäß einer weiteren Ausführungsform ein Härter und/oder ein Härtungsbeschleuniger umfassend jeweils mindestens eine Verbindung ausgewählt aus der Gruppe der Phosphorsäureester und Thiophosphorsäureester gemäß Formel (I) besonders bevorzugt, für deren Reste R¹, R², R³, R⁶, X und Indizes m, n, p gleichzeitig oder unabhängig voneinander gilt:
R¹, R² = gleichzeitig oder unabhängig voneinander Alkyl,
R³ = -O-Aryl, -O-Alkylaryl oder-O-Arylalkyl,
R⁶ = Wasserstoff, Alkyl oder-NHC(O)NR¹R²,
X = Sauerstoff oder Schwefel,
m = 1, 2 oder 3,
n = 0, 1 oder 2, wobei gilt: m + n = 3
p = 0, 1 oder 2.

Besonders bevorzugt werden dabei Phosphorsäureester und Thiophosphorsäureester gemäß Formel (I) für deren Index p gilt:
p = 0 oder 1, insbesondere 0.

Somit werden gemäß der vorliegenden Erfindung weiterhin ein Härter und/oder ein Härtungsbeschleuniger umfassend jeweils mindestens eine Verbindung ausgewählt aus der Gruppe der Phosphorsäureester und Thiophosphorsäureester gemäß Formel (Ia) bevorzugt, wobei für Formel (Ia) gilt: 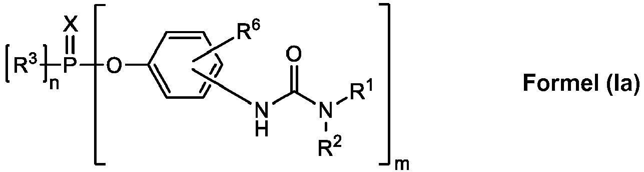 wobei für deren Reste R¹, R², R³, R⁶, X und Indizes m, n, gleichzeitig oder unabhängig voneinander gilt:
R¹, R² = gleichzeitig oder unabhängig voneinander Alkyl,
R³ = -O-Aryl, -O-Alkylaryl oder -O-Arylalkyl,
R⁶ = Wasserstoff, Alkyl oder -NHC(O)NR¹R²,
X = Schwefel oder Sauerstoff,
m = 1, 2 oder 3,
n = 0, 1 oder 2, wobei gilt: m + n = 3.

Weiterhin bevorzugt sind ein Härter und/oder ein Härtungsbeschleuniger umfassend jeweils mindestens eine Verbindung ausgewählt aus der Gruppe der Phosphorsäureester oder Thiophosphorsäureester gemäß Formel (I), für deren Reste R¹, R², R³, R⁶, X und Indizes m, n, p gleichzeitig oder unabhängig voneinander gilt:
R¹, R² = gleichzeitig oder unabhängig voneinander Alkyl, insbesondere Methyl oder Ethyl
R³ = -O-Aryl oder -O-Alkylaryl, insbesondere Phenoxy oder Tolyloxy,
R⁶ = Wasserstoff oder Alkyl, insbesondere Wasserstoff oder Methyl,
X = Sauerstoff oder Schwefel,
m = 1, 2 oder 3,
n = 0, 1 oder 2, wobei gilt: m + n = 3
p = 0 oder 1, insbesondere 0.

Weiterhin bevorzugt sind ein Härter und/oder ein Härtungsbeschleuniger umfassend jeweils mindestens eine Verbindung ausgewählt aus der Gruppe der Phosphorsäureester oder Thiophosphorsäureester gemäß Formel (I), für deren Reste R¹, R², R⁶, X und Indizes m, n, p gleichzeitig oder unabhängig voneinander gilt:
R¹, R² = gleichzeitig oder unabhängig voneinander Methyl oder Ethyl,
R⁶ = Wasserstoff oder Alkyl, insbesondere Wasserstoff oder Methyl,
X = Schwefel oder Sauerstoff,
m = 3,
n = p = 0.

Ganz besonders bevorzugt sind ein Härter und/oder ein Härtungsbeschleuniger umfassend jeweils mindestens eine Verbindung ausgewählt aus der Gruppe der Phosphorsäureester oder Thiophosphorsäureester gemäß Formel (Ia), für deren Reste R¹, R², R⁶, X und Indizes m, n gleichzeitig oder unabhängig voneinander gilt:
R¹, R² = gleichzeitig oder unabhängig voneinander Methyl oder Ethyl,
R⁶ = Wasserstoff oder Methyl,
X = Schwefel oder Sauerstoff,
m = 3,
n = 0.

Alternativ bevorzugt gemäß der vorliegenden Erfindung sind Phosphonate und Thiophosphonate. Somit sind gemäß einer weiteren Ausführungsform ein Härter und/oder ein Härtungsbeschleuniger umfassend jeweils mindestens eine Verbindung ausgewählt aus der Gruppe der Phosphonate und Thiophosphonate gemäß Formel (I) besonders bevorzugt, für deren Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl oder Aryl,
R⁶ = Wasserstoff, Alkyl oder -NHC(O)NR¹R²,
X = Sauerstoff oder Schwefel,
m = 2,
n = 1,
p = 0, 1 oder 2.

Besonders bevorzugt werden dabei Phosphonate und Thiophosphonate gemäß Formel (I) für deren Index p gilt:
p = 0 oder 1, insbesondere 0.

Somit werden gemäß der vorliegenden Erfindung weiterhin ein Härter und/oder ein Härtungsbeschleuniger umfassend jeweils mindestens eine Verbindung ausgewählt aus der Gruppe der Phosphonate und Thiophosphonate gemäß Formel (Ia) bevorzugt, wobei für Formel (la) gilt: 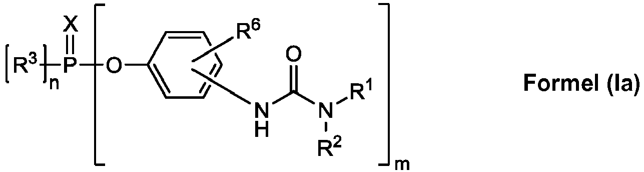 wobei für deren Reste R¹, R², R³, R⁶, X und Indizes m, n gleichzeitig oder unabhängig voneinander gilt:
R¹, R² = gleichzeitig oder unabhängig voneinander Alkyl, insbesondere Methyl oder Ethyl,
R³ = Alkyl oder Aryl, insbesondere Phenyl,
R⁶ = Wasserstoff, Alkyl oder -NHC(O)NR¹R²,insbesondere Wasserstoff oder Methyl,
X = Schwefel oder Sauerstoff,
m = 2,
n = 1.

Weiterhin bevorzugt gemäß der vorliegenden Erfindung sind ein Härter und/oder ein Härtungsbeschleuniger umfassend jeweils mindestens eine Verbindung ausgewählt aus der Gruppe der Phosphonate und Thiophosphonate gemäß Formel (I), für deren Reste R¹, R², R³, R⁶, X und Indizes m, n, p gleichzeitig oder unabhängig voneinander gilt:
R¹, R² = gleichzeitig oder unabhängig voneinander Alkyl, insbesondere Methyl oder Ethyl,
R³ = Aryl, insbesondere Phenyl,
R⁶ = Wasserstoff oder Alkyl, insbesondere Wasserstoff oder Methyl,
X = Sauerstoff oder Schwefel,
m = 2,
n = 1,
p = 0 oder 1, insbesondere 0.

Zudem alternativ bevorzugt gemäß der vorliegenden Erfindung sind Phosphinate und Thiophosphinate. Somit sind gemäß einer weiteren Ausführungsform ein Härter und/oder ein Härtungsbeschleuniger umfassend jeweils mindestens eine Verbindung ausgewählt aus der Gruppe der Phosphinate und Thiophosphinate gemäß Formel (I) besonders bevorzugt, für deren Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl oder Aryl,
R⁶ = Wasserstoff, Alkyl oder -NHC(O)NR¹R²,
X = Sauerstoff oder Schwefel,
m = 1,
n = 2,
p = 0, 1 oder 2.

Besonders bevorzugt werden dabei Phosphinate und Thiophosphinate gemäß Formel (I) für deren Index p gilt:
p = 0 oder 1, insbesondere 0.

Somit werden gemäß der vorliegenden Erfindung weiterhin bevorzugt ein Härter und/oder ein Härtungsbeschleuniger umfassend jeweils mindestens eine Verbindung ausgewählt aus der Gruppe der Phosphinate und Thiophosphinate gemäß Formel (Ia) 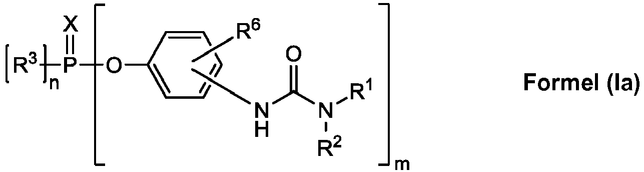 wobei für die Reste R¹, R², R³, R⁶, X und Indizes m, n gleichzeitig oder unabhängig voneinander gilt:
R¹, R² = gleichzeitig oder unabhängig voneinander Methyl oder Ethyl,
R³ = Alkyl oder Aryl,
R⁶ = Wasserstoff, Alkyl oder -NHC(O)NR¹R²,
X = Schwefel oder Sauerstoff,
m = 1,
n = 2.

Weiterhin bevorzugt gemäß der vorliegenden Erfindung sind ein Härter und/oder ein Härtungsbeschleuniger umfassend jeweils mindestens eine Verbindung ausgewählt aus der Gruppe der Phosphinate und Thiophosphinate gemäß Formel (I), für deren Reste R¹, R², R³, R⁶, X und Indizes m, n, p gleichzeitig oder unabhängig voneinander gilt:
R¹, R² = gleichzeitig oder unabhängig voneinander Alkyl, insbesondere Methyl oder Ethyl,
R³ = Aryl, insbesondere Phenyl,
R⁶ = Wasserstoff oder Alkyl, insbesondere Wasserstoff oder Methyl,
X = Sauerstoff oder Schwefel,
m = 1,
n = 2,
p = 0 oder 1, insbesondere 0.

Unabhängig davon, welche Oxidationsstufe der Phosphor in Formel (I) oder Formel (Ia) aufweist, ist im Zusammenhang mit der vorliegenden Erfindung wesentlich, dass der Index m = 1, 2, 3 bedeutet, da somit Verbindungen bereit gestellt werden können, die besonders gut zur Härtung von Epoxidharzen oder Epoxidharz-Zusammensetzungen, insbesondere als Härter oder Härtungsbeschleuniger, eingesetzt werden können. Ohne an die Theorie gebunden zu sein, kann gesagt werden, dass der obligatorisch vorhandene Rest -NHC(O)NR¹R² einen entscheidenen Einfluss auf die Härtung von Epoxidharzen ausübt. Hierbei bedeuten die Reste R¹ und R² in Formel (I) bevorzugt Wasserstoff oder Alkyl, wobei mindestens ein Rest R¹ oder R² ungleich Wasserstoff bedeutet bzw. die Reste R¹ und R² nicht gleichzeitig Wasserstoff bedeuten. Besonders bevorzugt bedeuten die Reste R¹ und R² gleichzeitig oder unabhängig voneinander Alkyl, wobei R¹ und R² verschieden oder gleich sein können. Ganz besonders bevorzugt bedeuten die Reste R¹ und R² gleichzeitig Methyl oder Ethyl.

Besonders überraschend haben sich die erfindungsgemäßen Härter und Härtungsbeschleuniger in Testungen zum Flammschutz im Vergleich zu bekannten Härtern oder Härtungsbeschleunigern als flammhemmende Härter und Härtungsbeschleuniger herausgestellt. Diese Härter und Härtungsbeschleuniger sind als halogenfrei zu bezeichnen. Ohne an die Theorie gebunden zu sein, kann gesagt werden, dass diese Härter und Härtungsbeschleuniger im Vergleich zu bekannten Härtern oder Härtungsbeschleunigern aufgrund des in den Verbindungen enthaltenen Phosphors eine zusätzliche Wirkung als Flammschutzmittel aufweisen. So weisen die erfindungsgemäßen Härter und Härtungsbeschleuniger eine gute bis sehr gute Wirkung als Flammschutzmittel in den gehärteten Epoxidharzen auf.

Im Vergleich zu aktuell verwendeten Flammschutzmitteln für Epoxidharze, die oftmals in großen Mengen als Additiv zugegeben werden müssen und nicht chemisch in die Harzmatrix eingebunden sind, handelt es sich hier um ein reaktives Flammschutzmittel, das über eine chemische Bindung direkt in der Harzmatrix verankert wird. Ein Herauslösen aus der Matrix ist somit nicht zu erwarten.

Somit ist ebenfalls die Verwendung einer Verbindung gemäß Formel (I') oder eines Härters gemäß Formel (I') oder eines Härtungsbeschleunigers gemäß Formel (I') als Flammschutzmittel in Epoxidharzen, oder in Pulverlacken, Vergussmassen, Klebstoffen oder gehärteten Formmassen umfassend jeweils mindestens ein Epoxidharz, Gegenstand der vorliegenden Erfindung, wobei für Formel (I') gilt: 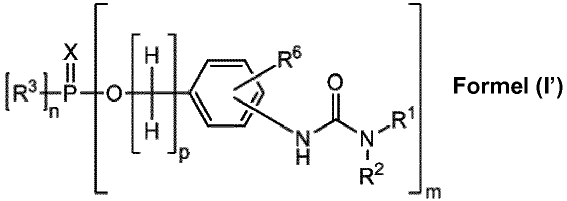 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
   p = 0, 1 oder 2.

Wie oben bereits ausgeführt hat sich zudem herausgestellt, dass diese Verbindungen als Härter und/oder als Härtungsbeschleuniger einsetzbar sind. So konnte in experimentellen Untersuchungen gezeigt werden, dass diese Verbindungen als Härter zur Härtung von Epoxidharzen, insbesondere als alleinige Härter zur Härtung von Epoxidharzen, eingesetzt werden können.

Gemäß einer alternativen Ausführung können die Verbindungen gemäß Formel (I') auch als Härtungsbeschleuniger zur beschleunigten Härtung von Epoxidharzen eingesetzt werden. In experimentellen Untersuchungen hat sich gezeigt, dass die erfindungsgemäßen Verbindungen insbesondere die Härtung von Epoxidharzen beschleunigen, die mit Dicyandiamid gehärtet werden. Ohne an die experimentellen Ergebnisse gebunden zu sein, können die erfindungsgemäßen Verbindungen jedoch auch als Härtungsbeschleuniger zusammen mit Härtern aus der Gruppe der Guanidin-Derivate, aromatischen Amine, modifizierten Polyamine, Semicarbazon-Derivate oder Cyanamid eingesetzt werden. Auch zusammen mit diesen Härtern kann eine Härtung beschleunigt werden.

Alternativ oder gleichzeitig kann auch vorgesehen sein, dass ein Härter oder ein Härtungsbeschleuniger gemäß der vorliegenden Erfindung zusammen mit einem weiteren Härter und/oder Härtungsbeschleuniger gemäß Formel (I'), der verschieden ist von dem zuerst genannten Härter oder Härtungsbeschleuniger der vorliegenden Erfindung, eingesetzt wird. Somit ist auch eine Härterzusammensetzung umfassend oder insbesondere bestehend aus mindestens zwei verschiedenen Härtern und/oder Härtungsbeschleunigern jeweils gemäß Formel (I') Gegenstand der vorliegenden Erfindung. Somit ist auch eine Härterzusammensetzung umfassend oder insbesondere bestehend aus i) mindestens zwei verschiedenen Härtern umfassend jeweils mindestens eine Verbindung aus der Gruppe der Ester phosphorhaltiger Säuren gemäß Formel (I') oder gemäß Formel (la), oder ii) mindestens zwei verschiedenen Härtungsbeschleunigern umfassend jeweils mindestens eine Verbindung aus der Gruppe der Ester phosphorhaltiger Säuren gemäß Formel (I') oder gemäß Formel (la), oder iii) mindestens einen Härter umfassend mindestens eine Verbindung aus der Gruppe der Ester phosphorhaltiger Säuren gemäß Formel (I') oder gemäß Formel (la), und mindestens einen Härtungsbeschleuniger umfassend mindestens eine Verbindung aus der Gruppe der Ester phosphorhaltiger Säuren gemäß Formel (I') oder gemäß Formel (la), wobei der Härter und der Härtungsbeschleuniger verschieden voneinander sind und unterschiedliche Verbindungen aus der Gruppe der Ester phosphorhaltiger Säuren gemäß Formel (I') oder Formel (la) umfassen, Gegenstand der vorliegenden Erfindung.

Alternativ kann ein Härter oder ein Härtungsbeschleuniger der vorliegenden Erfindung auch zusammen mit bekannten Härtern oder Beschleunigern eingesetzt werden. Somit ist auch eine Härterzusammensetzung umfassend oder insbesondere bestehend aus
a) einem Härter zur Härtung von Epoxidharzen der verschieden ist von einem Härter oder Härtungsbeschleuniger gemäß Formel (I'), oder einem Härtungsbeschleuniger zur beschleunigten Härtung von Epoxidharzen, der verschieden ist von einem Härter oder Härtungsbeschleuniger gemäß Formel (I') und
b) mindestens einem Härter oder Härtungsbeschleuniger gemäß Formel (I'), Gegenstand der vorliegenden Erfindung.

Besonders bevorzugt wird eine Härterzusammensetzung umfassend oder insbesondere bestehend aus
a) mindestens einem Härter zur Härtung von Epoxidharzen, der verschieden ist von einem Härter und/oder einem Härtungsbeschleuniger umfassend eine Verbindung aus der Gruppe der Ester phosphorhaltiger Säuren gemäß Formel (I') oder Formel (la), und
b) mindestens einem Härtungsbeschleuniger zur beschleunigten Härtung von Epoxidharzen umfassend eine Verbindung aus der Gruppe der Ester phosphorhaltiger Säuren gemäß Formel (I') oder Formel (Ia).

Zudem hat sich weiterhin besonders überraschend gezeigt, dass die erfindungsgemäßen Härter und Härtungsbeschleuniger nicht nur besonders gut zur Härtung oder beschleunigten Härtung von Epoxidharzen eingesetzt werden können, sondern auch eine hervorragende Lagerstabilität in Epoxidharzen aufweisen. Somit können die Härter und Härtungsbeschleuniger als hoch latent bezeichnet werden. Die erfindungsgemäßen Härter können somit auch als einkomponentige Pasten, d.h. vorformuliert, gebrauchsfertig gemischt mit Epoxidharz, bereitgestellt werden. Diese Ergebnisse waren in Summe vollkommen unerwartet.

In Weiterbildung der vorliegenden Erfindung sind ebenso Epoxidharz-Zusammensetzungen umfassend a) mindestens ein Epoxidharz und b) mindestens einen Härter gemäß der oben beschriebenen Art und/oder mindestens einen Härtungsbeschleuniger gemäß der oben beschriebenen Art Gegenstand der vorliegenden Erfindung.

Vorzugsweise umfasst die Epoxidharz-Zusammensetzung neben dem Härter oder Härtungsbeschleuniger jeweils gemäß Formel (I') oder Mischungen hiervon a) keine weiteren Härter, Co-Härter, Härtungsbeschleuniger oder andere Katalysatoren zur Härtung von Epoxidharzen und/oder b) keine weiteren Flammschutz-Additive oder flammhemmende Additive.

Somit ist auch eine Epoxidharz-Zusammensetzung Gegenstand der vorliegenden Erfindung, die a) mindestens ein Epoxidharz und b) mindestens einen Härter gemäß Formel (I') und/oder mindestens einen Härtungsbeschleuniger gemäß Formel (I') enthält, insbesondere daraus besteht.

In Weiterbildung der vorliegenden Erfindung sind somit insbesondere auch Epoxidharz-Zusammensetzungen Gegenstand der vorliegenden Erfindung, die umfassen
a) mindestens ein Epoxidharz, und
b1) mindestens einen Härter zur Härtung von Epoxidharzen umfassend mindestens eine Verbindung aus der Gruppe der Ester phosphorhaltiger Säuren gemäß Formel (I') oder Formel (la), und/oder
b2) mindestens einen Härtungsbeschleuniger zur beschleunigten Härtung von Epoxidharzen umfassend mindestens eine Verbindung aus der Gruppe der Ester phosphorhaltiger Säuren gemäß Formel (I') oder Formel (Ia),
wobei Formel (I') und Formel (la) die hierin beschriebene Struktur aufweisen.

Es kann jedoch auch vorgesehen sein, dass die erfindungsgemäße Epoxidharz-Zusammensetzung a) mindestens ein Epoxidharz, b) einen Härtungsbeschleuniger gemäß Formel (I') und c) einen Härter zur Härtung von Epoxidharzen, der verschieden ist von einem Härter oder Härtungsbeschleuniger gemäß Formel (I'), enthält, insbesondere daraus besteht.

Es kann jedoch auch vorgesehen sein, dass die erfindungsgemäße Epoxidharz-Zusammensetzung a) mindestens ein Epoxidharz, b) einen Härtungsbeschleuniger zur beschleunigten Härtung von Epoxidharzen, der verschieden ist von einem Härter oder Härtungsbeschleuniger gemäß Formel (I'), und c) einen Härter zur Härtung von Epoxidharzen gemäß Formel (I') enthält, insbesondere daraus besteht.

In Weiterbildung der vorliegenden Erfindung sind somit insbesondere auch Epoxidharz-Zusammensetzungen Gegenstand der vorliegenden Erfindung, die umfassen
a) mindestens ein Epoxidharz, und
b) mindestens einen Härter zur Härtung von Epoxidharzen, der verschieden ist von einem Härter und einem Härtungsbeschleuniger umfassend einer Verbindung aus der Gruppe der Ester phosphorhaltiger Säuren gemäß Formel (I') oder Formel (la), und
c) mindestens einen Härtungsbeschleuniger zur beschleunigten Härtung von Epoxidharzen umfassend einer Verbindung aus der Gruppe der Ester phosphorhaltiger Säuren gemäß Formel (I') oder Formel (la),
wobei Formel (I') und Formel (la) die hierin beschriebene Struktur aufweisen.

Als Komponente b) können dabei insbesondere Härter aus der Gruppe der Guanidin-Derivate, insbesondere Dicyandiamid, aromatischen Amine, modifizierten Polyamine, Semicarbazon-Derivate oder Cyanamid eingesetzt werden.

Im Hinblick auf die zu härtenden Epoxidharze unterliegt die vorliegende Erfindung keinerlei Beschränkung. Es kommen sämtliche handelsüblichen Produkte in Frage, die üblicherweise mehr als eine 1,2-Epoxidgruppe (Oxiran) aufweisen und dabei gesättigt oder ungesättigt, aliphatisch, cycloaliphatisch, aromatisch oder heterozyklisch sein können. Außerdem können die Epoxidharze Substituenten wie Phosphor- und Hydroxyl-Gruppen aufweisen. Epoxidharze auf Basis Glycidylpolyether von 2,2-Bis(4-hydroxyphenyl)-propan (Bisphenol A), Glycidylpolyether von 2,2-Bis(4-hydroxyphenyl)methan (Bisphenol F) und Glycidylpolyether von Novolaken können durch Verwendung der erfindungsgemäßen Härter und Härtungsbeschleuniger besonders gut gehärtet werden.

Die Einsatzmenge der erfindungsgemäßen Härter oder Härtungsbeschleuniger unterliegt keinen Beschränkungen. Bevorzugt werden jedoch auf 100 Teile Harz 0,01 bis 15 Teile Härter oder Härtungsbeschleuniger eingesetzt, vorzugsweise 0,1 bis 15 Teile, vorzugsweise 0,1 bis 10 Teile und ganz besonders bevorzugt 0,1 bis 8 Teile. Auch eine Kombination mehrerer erfindungsgemäßer Härter oder eine Kombination von erfindungsgemäßen Härtern mit weiteren Co-Härtern wird durch diese Erfindung mit abgedeckt.

Sollte ein erfindungsgemäßer Härter als alleiniger Härter eingesetzt werden, so werden bevorzugt auf 100 Teile Harz 0,1 bis 15 Teile eingesetzt, vorzugsweise 1 bis 15 Teile, vorzugsweise 4 bis 15 Teile und ganz besonders bevorzugt 4 bis 8 Teile.

Sollte ein erfindungsgemäßer Härtungsbeschleuniger zur beschleunigten Härtung zusammen mit einem bekannten Härter, wie beispielsweise Dicyandiamid, eingesetzt werden, so werden bevorzugt auf 100 Teile Harz 0,1 bis 15 Teile eingesetzt, vorzugsweise 0,1 bis 10 Teile, vorzugsweise 0,1 bis 5 Teile und ganz besonders bevorzugt 0,1 bis 4 Teile.

Die Härtung der Epoxidharze mit Hilfe der erfindungsgemäß eingesetzten Härter und/oder Härtungsbeschleuniger erfolgt in der Regel bei Temperaturen von 20 bis 140 °C. Die Wahl der Härtungstemperatur ist abhängig von der spezifischen Verarbeitungs- und Produktanforderung und kann über die Formulierung vor allem durch Regulierung der Härtermengen sowie durch Zugabe von Additiven variiert werden. Hierbei ist es unerheblich, auf welche Art den Harzformulierungen Energie zugeführt wird. Beispielhaft kann dies in Form von Wärme durch einen Ofen oder Heizelemente, aber ebenso mittels Infrarotstrahlern oder Anregung durch Mikrowellen oder sonstiger Strahlen geschehen.

Durch den Zusatz weiterer handelsüblicher Additive, wie sie dem Fachmann zur Härtung von Epoxidharzen bekannt sind, kann das Härtungsprofil der erfindungsgemäßen Formulierungen variiert werden.

Additive zur Verbesserung der Verarbeitbarkeit der unausgehärteten Epoxidharz-Zusammensetzungen oder zur Anpassung der thermisch-mechanischen Eigenschaften der duroplastischen Produkte an das Anforderungsprofil umfassen beispielsweise Reaktivverdünner, Füllstoffe, Rheologieadditive wie Thixotropierungsmittel oder Dispergieradditive, Defoamer, Farbstoffe, Pigmente, Zähmodifikatoren oder Schlagzähverbesserer.

In Weiterbildung der Erfindung ist auch ein Prepreg oder Composit-Material Gegenstand der vorliegenden Erfindung, das
a) ein Trägermaterial, insbesondere ein Fasermaterial, und
b) mindestens ein Epoxidharz, und
c) mindestens einen Härter oder Härtungsbeschleuniger oder eine Härterzusammensetzung der hierin beschriebenen Art,
umfasst.

In Weiterbildung der Erfindung ist somit insbesondere auch ein Prepreg oder Composit-Material Gegenstand der vorliegenden Erfindung, das
a) ein Trägermaterial, insbesondere ein Fasermaterial, und
b) mindestens ein Epoxidharz, und
c1) mindestens einen Härter zur Härtung von Epoxidharzen, der verschieden ist von einem Härter und einem Härtungsbeschleuniger umfassend eine Verbindung aus der Gruppe der Ester phosphorhaltiger Säuren gemäß Formel (I) oder Formel (la), und
c2) mindestens einen Härtungsbeschleuniger zur beschleunigten Härtung von Epoxidharzen umfassend einer Verbindung aus der Gruppe der Ester phosphorhaltiger Säuren gemäß Formel (I') oder Formel (Ia), umfasst,
wobei Formel (I') und Formel (la) die hierin beschriebene Struktur aufweisen.

Als Trägermaterial können hierbei alle üblichen Trägermaterialien eingesetzt werden. Hierbei sind insbesondere jedoch nicht abschließend zu nennen: Fasern aus Glas, Kohlenstoff, Aramid und Holz bzw. Naturfasern.

Weiterhin hierin beschrieben ist auch ein Verfahren zur Herstellung der hierin beschriebenen Verbindungen. Beschrieben ist ein Verfahren zur Herstellung einer Verbindung der Formel (I'), insbesondere einer Verbindung ausgewählt aus der Gruppe der Phosphorsäureester, Thiophosphorsäureester, Phosphonate, Thiophosphonate, Phosphinate und Thiophosphinate gemäß Formel (I'), wobei für Formel (I') gilt: 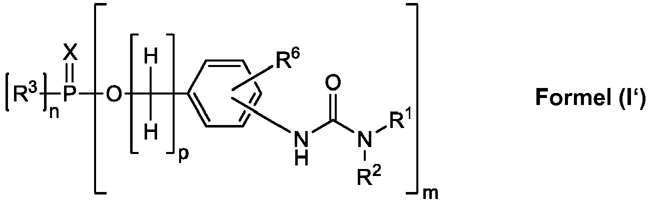 wobei für die Reste R¹, R², R³, R⁶, X und Indizes m, n, p gleichzeitig oder unabhängig voneinander gilt:
R¹, R² = gleichzeitig oder unabhängig voneinander Alkyl, insbesondere gleichzeitig oder unabhängig voneinander Methyl oder Ethyl,
R³ = Alkyl, Aryl, -O-Alkyl, -O-Aryl, -O-Alkylaryl oder-O-Arylalkyl, insbesondere Phenyl, Phenoxy oder Tolyloxy,
R⁶ = Wasserstoff, Alkyl oder -NHC(O)NR¹R², insbesondere Wasserstoff oder Alkyl, besonders bevorzugt Wasserstoff oder Methyl,
X = Sauerstoff oder Schwefel,
m = 1, 2 oder 3,
n = 0, 1 oder 2, wobei gilt: m + n = 3
p = 0, 1 oder 2, insbesondere 0,
umfassend die Verfahrensschritte:
A) Bereitstellen einer Verbindung gemäß Formel (II), 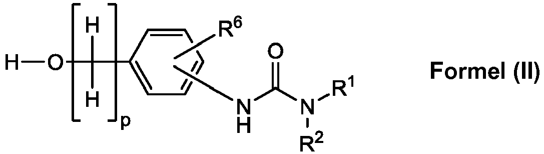 wobei für die Reste R¹, R², R⁶ und den Index p die oben angegebene Bedeutung gilt,
B) Umsetzung der in A) bereitgestellten Verbindung mit einer Verbindung gemäß Formel (III), 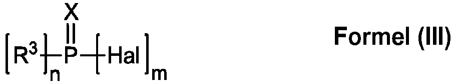 wobei für die Reste R³, X und die Indizes m, n die oben angegebene Bedeutung gilt, und Hal = Chlor oder Brom, insbesondere Chlor, bedeutet,
C) Isolieren der Verbindung gemäß Formel (I').

In aufwendigen experimentellen Untersuchungen hat sich herausgestellt, dass die gewünschten Verbindungen gemäß Formel (I) ausgehend von den Verbindungen gemäß Formel (II) und Formel (III) mit einer guten Raum-Zeit Ausbeute darstellbar sind. Besonders überraschend hat sich herausgestellt, dass die gewünschten Verbindungen selektiv darstellbar sind.

Bevorzugt wird dabei in Verfahrensschritt A) eine Verbindung gemäß Formel (II) bereitgestellt, wobei für die Reste R¹, R², R⁶ und den Index p gleichzeitig oder unabhängig voneinander gilt:
R¹, R² = gleichzeitig oder unabhängig voneinander Alkyl, insbesondere gleichzeitig Alkyl, insbesondere gleichzeitig oder unabhängig voneinander Methyl oder Ethyl, insbesondere gleichzeitig Methyl oder Ethyl,
R⁶ = Wasserstoff, Alkyl oder -NHC(O)NR¹R², insbesondere Wasserstoff oder Alkyl, besonders bevorzugt Wasserstoff oder Methyl,
p = 0.

Somit wird auch ein Verfahren beschrieben, in dem in Verfahrensstufe A) eine Verbindung gemäß Formel (IIa) bereitgestellt und diese Verbindung gemäß Formel (IIa) in Verfahrensstufe B), wie oben beschrieben, umgesetzt wird, wobei für Formel (IIa) gilt 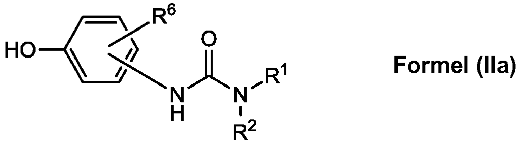 wobei für die Reste R¹, R², R⁶ gleichzeitig oder unabhängig voneinander gilt:
R¹, R² = gleichzeitig oder unabhängig voneinander Alkyl, insbesondere gleichzeitig Alkyl, insbesondere gleichzeitig oder unabhängig voneinander Methyl oder Ethyl, insbesondere gleichzeitig Methyl oder Ethyl,
R⁶ = Wasserstoff, Alkyl oder -NHC(O)NR¹R², insbesondere Wasserstoff oder Alkyl, besonders bevorzugt Wasserstoff oder Methyl.

Hierbei werden Verbindungen gemäß Formel (II) oder Formel (IIa) eingesetzt, die ihrerseits nach literaturbekannten Verfahren hergestellt werden können (vgl. hierzu insbesondere GB 999 862 A, GB 1 153 261 A, US 3 488 376 A, US 2 795 610 A und EP 0 108 712 A1).

In weitergehenden experimentellen Untersuchungen hat sich weiter vorteilhaft herausgestellt, dass die Umsetzung in Verfahrensstufe B) besonders erfolgreich in einem polar-aprotischen Lösungsmittel, insbesondere Acetonitril, *N,N*-Dimethylformamid und/oder Aceton, bevorzugt Acetonitril, durchgeführt werden kann. Gleichzeitig oder unabhängig hiervon kann dabei weiterhin vorgesehen sein, dass die Umsetzung in Gegenwart eines tertiären Amins, insbesondere Triethylamin, Tri-*n*-butylamin, Triisopropylamin und/oder Pyridin, bevorzugt Triethylamin, erfolgt.

Die Umsetzung kann dabei weiter bevorzugt_bei einer Temperatur im Bereich von -10 bis 100 °C, insbesondere bei einer Temperatur im Bereich von -10 bis 80 °C, ganz besonders bevorzugt bei einer Temperatur im Bereich von -10 bis 60 °C durchgeführt werden, wobei gleichzeigt oder unabhängig hiervon insbesondere ein Druck im Bereich von 850 bis 1200 mPa, insbesondere ein Druck im Bereich von 950 bis 1200 mPa, und ganz besonders bevorzugt ein Druck im Bereich von 1000 bis 1200 mPa eingestellt wird.

Weiterhin bevorzugt kann die Umsetzung in Verfahrensstufe B) durchgeführt werden, wenn das Molverhältnis der Verbindung gemäß Formel (II) oder Formel (IIa) zur Verbindung gemäß Formel (III) einem Verhältnis im Bereich von 4 : 1 bis 1 : 1, bevorzugt 3 : 1 bis 1 : 1, weiter bevorzugt 3 : 1 bis 2 : 1, entspricht.

Des Weiteren haben experimentelle Untersuchungen gezeigt, dass die Isolierung der Verbindung gemäß Formel (I) in Verfahrensschritt C) gemäß unterschiedlichen Verfahrensteilschritten erfolgen kann. Besonders vorteilhaft und in guten Reinheiten können die erfindungsgemäßen Verbindungen isoliert werden, durch
a) Abfiltrieren aus dem Reaktionsgemisch aus Verfahrensschritt B), anschließendes Waschen mit Wasser und Trocknung im Vakuum, oder
b) Ausfällen aus dem Reaktionsgemisch aus Verfahrensschritt B) durch Zugabe von Wasser, Abfiltrieren des entstandenen Feststoffs, anschließendes Waschen mit Wasser und Trocknung im Vakuum, oder
c) Eindampfen des Reaktionsgemischs aus Verfahrensschritt B) im Vakuum, Aufnehmen des Rückstands in Aceton, Abfiltrieren der unlöslichen Bestandteile, Eindampfen des Filtrats im Vakuum und Trocknung im Vakuum.

Alternativ können die gewünschten Verbindungen gemäß Formel (I') auch durch die Reaktion von Isocyanaten mit Aminen dargestellt werden. Somit wird auch ein Verfahren zur Herstellung einer Verbindung der Formel (I'), insbesondere einer Verbindung ausgewählt aus der Gruppe der Phosphorsäureester, Thiophosphorsäureester, Phosphonate, Thiophosphonate, Phosphinate und Thiophosphinate gemäß Formel (I') beschrieben, wobei für Formel (I') gilt: 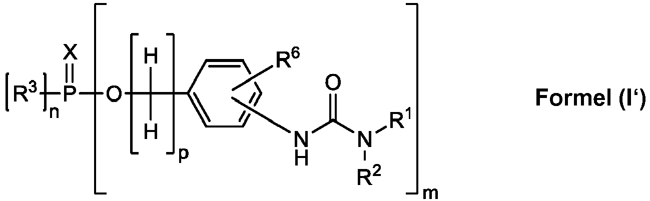 wobei für die Reste R¹, R², R³, R⁶, X und Indizes m, n, p gleichzeitig oder unabhängig voneinander gilt:
R¹, R² = gleichzeitig oder unabhängig voneinander Alkyl, insbesondere gleichzeitig oder unabhängig voneinander Methyl oder Ethyl,
R³ = Alkyl, Aryl, -O-Aryl, -O-Alkylaryl oder -O-Arylalkyl, insbesondere Phenyl, Phenoxy oder Tolyloxy,
R⁶ = Wasserstoff, Alkyl oder -NHC(O)NR¹R², insbesondere Wasserstoff oder Alkyl, besonders bevorzugt Wasserstoff oder Methyl,
X = Sauerstoff oder Schwefel,
m = 1, 2 oder 3,
n = 0, 1 oder 2, wobei gilt: m + n = 3
p = 0, 1 oder 2, insbesondere 0,
umfassend die Verfahrensschritte:
A) Bereitstellen eines Isocyanats gemäß Formel (IV), 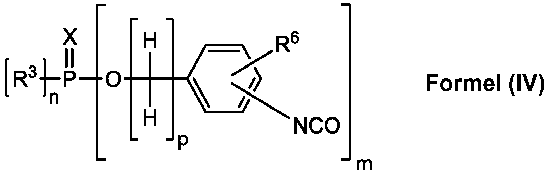 wobei für die Reste R³, R⁶, X und Indizes m, n, p gleichzeitig oder unabhängig voneinander gilt:
   R³ = Alkyl, Aryl, -O-Aryl, -O-Alkylaryl oder -O-Arylalkyl, insbesondere Phenyl, Phenoxy oder Tolyloxy,
   R⁶ = Wasserstoff, Alkyl oder -NCO, insbesondere Wasserstoff oder Alkyl, besonders bevorzugt Wasserstoff oder Methyl,
   X = Sauerstoff oder Schwefel,
   m = 1, 2 oder 3,
   n = 0, 1 oder 2, wobei gilt: m + n = 3
   p = 0, 1 oder 2.
B) Umsetzung der in A) bereitgestellten Verbindung mit einem Amin gemäß Formel (V), 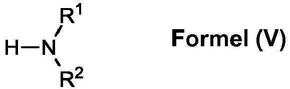 wobei für die Reste R¹, R² gleichzeitig oder unabhängig voneinander gilt:
   R¹, R² = gleichzeitig oder unabhängig voneinander Alkyl, insbesondere gleichzeitig oder unabhängig voneinander Methyl oder Ethyl, insbesondere gleichzeitig Methyl oder Ethyl,
C) Isolieren der Verbindung gemäß Formel (I').

Bevorzugt wird dabei in Verfahrensschritt A) eine Verbindung gemäß Formel (IV) bereitgestellt, wobei für die Reste R³, R⁶, X und die Indizes m, n, p gleichzeitig oder unabhängig voneinander gilt:
R³ = Alkyl, Aryl, -O-Aryl, -O-Alkylaryl oder -O-Arylalkyl,
R⁶ = Wasserstoff, Alkyl oder -NCO, insbesondere Wasserstoff oder Alkyl, besonders bevorzugt Wasserstoff oder Methyl,
X = Sauerstoff oder Schwefel,
m = 1, 2 oder 3,
n = 0, 1 oder 2, wobei gilt: m + n = 3
p = 0.

Somit wird auch ein Verfahren beschrieben, in dem in Verfahrensstufe A) eine Verbindung gemäß Formel (IVa) bereitgestellt und diese Verbindung gemäß Formel (IVa) in Verfahrensstufe B), wie oben beschrieben, umgesetzt wird, wobei für Formel (IVa) gilt 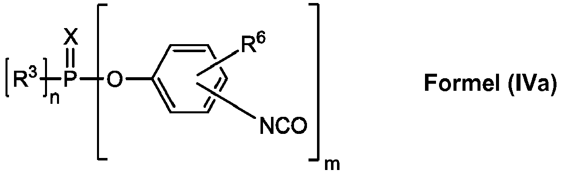 wobei für die Reste R³, R⁶, X und die Indizes m, n gleichzeitig oder unabhängig voneinander gilt:
R³ = Alkyl, Aryl, -O-Aryl, -O-Alkylaryl oder -O-Arylalkyl,
R⁶ = Wasserstoff, Alkyl oder -NCO, insbesondere Wasserstoff oder Alkyl, besonders bevorzugt Wasserstoff oder Methyl,
X = Sauerstoff oder Schwefel,
m = 1, 2 oder 3,
n = 0, 1 oder 2, wobei gilt: m + n = 3.

Als Lösungsmittel können dabei besonders bevorzugt ein Lösungsmittel oder ein Lösungsmittelgemisch ausgewählt aus der Gruppe der a) polar-aprotischen Lösungsmittel, insbesondere Ethylacetat, Acetonitril, *N,N*-Dimethylformamid oder Aceton, bevorzugt Ethylacetat oder b) unpolar-aprotischen Lösungsmittel, insbesondere Toluen, Cyclohexan oder n-Hexan, bevorzugt Toluen, oder c) einem Lösungsmittelgemisch bestehend aus einem Lösungsmittel aus a) und einem Lösungsmittel aus b), insbesondere einem Gemisch aus Ethylacetat und Toluen, durchgeführt werden.

Die Umsetzung kann dabei weiter bevorzugt_bei einer Temperatur im Bereich von -10 bis 100 °C, insbesondere bei einer Temperatur im Bereich von -10 bis 80 °C, ganz besonders bevorzugt bei einer Temperatur im Bereich von 0 bis 60 °C durchgeführt werden, wobei gleichzeigt oder unabhängig hiervon insbesondere ein Druck im Bereich von 850 bis 1200 mPa, insbesondere ein Druck im Bereich von 950 bis 1200 mPa, und ganz besonders bevorzugt ein Druck im Bereich von 1000 bis 1200 mPa eingestellt wird.

Weiterhin bevorzugt kann die Umsetzung in Verfahrensstufe B) mit besonders guten Resultaten durchgeführt werden, wenn das Molverhältnis der Verbindung gemäß Formel (IV) zur Verbindung gemäß Formel (V) einem Verhältnis im Bereich von 1 : 6 bis 1 : 1, bevorzugt 5 : 1 bis 1 : 1, bevorzugt 4 : 1 bis 1 : 1, bevorzugt 3 : 1 bis 1 : 1, entspricht.

Gemäß einer Weiterführung der Erfindung ist auch die Verwendung einer hierin beschriebenen Verbindung gemäß Formel (I') oder Formel (Ia) zur Härtung von Epoxidharzen oder Epoxidharzzusammensetzungen Gegenstand der vorliegenden Erfindung. Somit sind auch die Verwendung eines Härters und eines Härtungsbeschleunigers umfassend jeweils mindestens eine Verbindung ausgewählt aus der Gruppe der Ester phosphorhaltiger Säuren gemäß Formel (I') oder Formel (Ia) als
a) Härter zur Härtung von Prepregs, Laminaten, Beschichtungen, Polymerharzgemischen, Pulverlacken, Vergussmassen oder Klebstoffen, jeweils umfassend mindestens ein Epoxidharz, oder
b) Härtungsbeschleuniger zur beschleunigten Härtung von Prepregs, Laminaten, Beschichtungen, Polymerharzgemischen, Pulverlacken, Vergussmassen oder Klebstoffen, jeweils umfassend mindestens ein Epoxidharz, oder
c) Flammschutzmittel in Epoxidharzen, oder in Pulverlacken, Vergussmassen, Klebstoffen oder gehärteten Formmassen umfassend jeweils mindestens ein Epoxidharz,
Gegenstand der Erfindung.

Im Folgenden wird die vorliegende Erfindung anhand von Beispielen erläutert, wobei die Erfindung jedoch nicht auf die Beispiele reduziert verstanden werden soll. Es ist vielmehr der Fall, dass jede Kombination von bevorzugten Ausführungen ebenfalls von der vorliegenden Erfindung umfasst wird.

### Beispiele

### 1) Verwendete Substanzen und zugehörige Abkürzungen

### Epoxidharz:

- ER: Epoxidharz mit EEW 182 - 187 (Epikote® Resin 828 LVEL, Hexion)

### Härter / Härtungsbeschleuniger:

- HA: TDI-Uron (DYHARD® UR500, AlzChem AG)
- H: Dicyandiamid (DYHARD® 100S, AlzChem AG)
- HA-I: Tri[*p*-(dimethylcarbamoylamino)phenyl]thiophosphat
- HA-II: Tri[*p*-(diethylcarbamoylamino)phenyl]thiophosphat
- HA-III: Tri[*p*-(dimethylcarbamoylamino)phenyl]phosphat
- HA-IV: Di[*p*-(dimethylcarbamoylamino)phenyl]phenylphosphat
- HA-V: [*p*-Dimethylcarbamoylamino)phenyl]diphenylphosphat
- HA-VI: Di[*p*-(dimethylcarbamoylamino)phenyl]phenylphosphonat
- HA-VII: [*p*-Dimethylcarbamoylamino)phenyl]diphenylphosphinat
- HA-VIII: Tri[*m*-(dimethylcarbamoylamino)phenyl]phosphat
- HA-IX: Tri[*o*-(dimethylcarbamoylamino)phenyl]phosphat
- HA-X: Tri[4-(dimethylcarbamoylamino)-3-methylphenyl]phosphat

### 2) Herstellung der erfindungsgemäßen Härter / Härtungsbeschleuniger

### Beispiel 1: Tri[p-(dimethylcarbamoylamino)phenyl]thiophosphat (HA-I)

HA-I entspricht einer Verbindung gemäß Formel (I) mit m = 3; n = p = 0; X = S; R¹ = R² = Methyl; R⁶ = H, wobei sich die -NHC(O)NR¹R²-Gruppe in *p*-Stellung befindet.

In einem N₂-gespülten Dreihalskolben mit Rückflusskühler, Tropftrichter, Thermometer und Magnetrührer wird eine Lösung aus 12,17 g (0,27 mol) Dimethylamin (99 %-ig, Linde) in 400 ml Toluen (zur Analyse, Merck) vorgelegt. Über den Tropftrichter wird eine Lösung aus 27,92 g (60 mmol) Tri(*p*-isocyanatophenyl)thiophosphat (27 %-ig in Ethylacetat, Bayer MaterialScience) in 285 ml Toluen langsam zugetropft, so dass die Temperatur nicht über 25 °C steigt (ggf. Kühlung durch Wasserbad). Während des Zutropfens fällt weißer Feststoff aus. Nach Beendigung der Zugabe wird die entstandene Suspension noch 1,5 h bei Raumtemperatur gerührt. Der Feststoff wird abgetrennt, mit wenig Toluen gewaschen und bei 60 °C im Vakuum getrocknet.

| | | | | | |
|---|---|---|---|---|---|
| Ausbeute: | 36,00 g (100 %) | | | | |
| Elementaranalyse: | ber.: | 53,99 % C; | 5,54 % H; | 13,99 % N; | 5,16 % P |
| | gef.: | 54,14 % C; | 5,68 % H; | 13,70 % N; | 5,22 % P |
| IR: | *v̅̃̅* (cm⁻¹) = 3356 (w); 1647 (s); 1605 (m); 1533 (m); 1501 (vs); 1407 (s); 1370 (s); 1303 (m); 1246 (m); 1179 (vs); 1159 (vs); 928 (vs); 832 (s); 779 (s); 754 (s); 580 (w); 558 (w); 521 (s) | | | | |
| ¹H-NMR (500,13 MHz, DMSO-d₆): | | δ (ppm) = 2.91 (s, 18 H, C*H₃*); 7.12 (d, 6 H, Ar-H, ³*J*_{HH} = 8.0 Hz); 7.50 (d, 6 H, Ar-H, ³*J*_{HH} = 9.0 Hz); 8.37 (s, 3 H, N*H*) | | | |
| ¹³C-NMR (125,77 MHz, DMSO-d₆): | | δ (ppm) = 36.20 (*C*H₃); 120.63 (d, Ar-*C*, ³*J*_{PC} = 4.6 Hz); 120.88 (Ar-*C*); 138.51 (Ar-*C*); 144.46 (d, Ar-*C*, ²*J*_{PC} = 8.3 Hz); 155.68 (*C*=O) | | | |
| ³¹P-NMR (202,46 MHz, DMSO-d₆): | | δ (ppm) = 55.08 (S=*P*(OAr)₃) | | | |

### Beispiel 2: Tri[p-(diethylcarbamoylamino)phenyl]thiophosphat (HA-II)

HA-II entspricht einer Verbindung gemäß Formel (I) mit m = 3; n = p = 0; X = S; R¹ = R² = Ethyl; R⁶ = H, wobei sich die -NHC(O)NR¹R²-Gruppe in *p*-Stellung befindet.

Die Herstellung von HA-II erfolgt analog zu Beispiel 1, wobei Dimethylamin durch 19,75 g (0,27 mol) Diethylamin (99 %-ig, Fluka) ersetzt wird.

| | | | | | |
|---|---|---|---|---|---|
| Ausbeute: | 40,20 g (98 %) | | | | |
| Elementaranalyse: | ber.: | 57,88 % C; | 6,62 % H; | 12,27 % N; | 4,52 % P |
| | gef.: | 57,75 % C; | 6,48 % H; | 12,15 % N; | 4,42 % P |
| IR: | *v̅̃̅* (cm⁻¹) = 3291 (w); 2973 (w); 2931 (w); 1632 (s); 1603 (m); 1502 (vs); 1450 (m); 1418 (s); 1379 (m); 1303 (m); 1267 (m); 1249 (m); 1223 (vs); 1159 (vs); 1100 (m); 1080 (m); 941 (vs); 920 (vs); 830 (s); 779 (m); 752 (m) | | | | |
| ¹H-NMR (500,13 MHz, DMSO-d₆): | | δ (ppm) = 1.08 (t, 18 H, C*H*₃, ³*J*_{HH} = 7.0 Hz); 3.33 (q, 12 H, C*H₂*, ³*J*_{HH} = 7.1 Hz); 7.12 (d, 6 H, Ar-H, ³*J*_{HH} = 8.0 Hz); 7.52 (d, 6 H, Ar-H, ³*J*_{HH} = 9.1 Hz); 8.24 (s, 3 H, N*H*) | | | |
| ¹³C-NMR (125,77 MHz, DMSO-d₆): | δ (ppm) = 13.86 (*C*H₃); 40.52 (C*H*₂); 120.54 (d, Ar-*C*, ³*J*_{PC} = 3.7 Hz); 121.13 (Ar-*C*); 138.51 (Ar-*C*); 144.46 (d, Ar-*C*, ²*J*_{PC} = 8.2 Hz); 154.35 (*C*=O) | | | | |
| ³¹P-NMR (202,46 MHz, DMSO-d₆): | δ (ppm) = 55.14 (S=*P*(OAr)₃) | | | | |

### Beispiel 3: Tri[p-(dimethylcarbamoylamino)phenyl]phosphat (HA-III)

HA-III entspricht einer Verbindung gemäß Formel (I) mit m = 3; n = p = 0; X = O; R¹ = R² = Methyl; R⁶ = H, wobei sich die -NHC(O)NR¹R²-Gruppe in *p*-Stellung befindet.

### a) Herstellung von N-(p-Hydroxyphenyl)-N',N'-dimethylharnstoff

Die Herstellung von *N*-(*p*-Hydroxyphenyl)-*N',N'*-dimethylharnstoff erfolgt, wie im Patent EP 0 108 712 A1 beschrieben, unter Verwendung von 90,00 g (0,825 mol) p-Aminophenol (98 %-ig, TCl), 90,00 g (0,837 mol) *N,N*-Dimethylcarbamoylchlorid (98 %-ig, Aldrich), 84,00 g (1,000 mol) Natriumhydrogencarbonat (zur Analyse, Merck) und 1800 ml Aceton (99,8 %-ig, VWR, über Molsieb getrocknet).

| | | | | |
|---|---|---|---|---|
| Ausbeute: | 82,48 g (55 %) | | | |
| Elementaranalyse: | ber.: | 59,99 % C; | 6,71 % H; | 15,55 % N |
| | gef.: | 59,90 % C; | 6,71 % H; | 15,50 % N |
| Schmelzpunkt: | 204 °C (DSC-Onset), 210 °C (DSC-Peak) | | | |
| IR: | *v̅̃̅* (cm⁻¹) = 3341 (w); 3181 (w); 2929 (w); 1615 (m); 1594 (m); 1505 (vs); 1485 (s); 1372 (vs); 1300 (m); 1271 (vs); 1189 (s); 1163 (s); 1103 (m); 1066 (m); 844 (m); 820 (s); 748 (s);562 (s); 514 (s) | | | |

### b) Herstellung von HA-III

In einem N₂-gespülten Dreihalskolben mit Rückflusskühler, Tropftrichter, Thermometer und Magnetrührer werden 3,78 g (21 mmol) *N*-(*p*-Hydroxyphenyl)-*N',N'-*dimethylharnstoff in 20 ml Acetonitril (100 %-ig, VWR) vorgelegt, 2,13 g (21 mmol) Triethylamin (99,5 %-ig, Sigma-Aldrich) zugegeben und das entstehende Reaktionsgemisch mittels Eisbad auf eine Temperatur von 0 °C gekühlt. Mittels Tropftrichter wird eine Lösung von 1,07 g (7 mmol) Phosphorylchlorid (zur Synthese, Merck) in 10 ml Acetonitril so zugetropft, dass die Temperatur nicht über 5 °C steigt. Danach wird das Eisbad entfernt und das Reaktionsgemisch über Nacht bei Raumtemperatur gerührt. Das Reaktionsgemisch wird mit 250 ml Wasser verdünnt.

Der danach anfallende Feststoff wird abgetrennt, mit wenig Wasser nachgewaschen und bei 60 °C im Vakuum getrocknet.

| | | | | | |
|---|---|---|---|---|---|
| Ausbeute: | 3,49 g (85 %) | | | | |
| Elementaranalyse: | ber.: | 55,48 % C; | 5,69 % H; | 14,38 % N | 5,30°% P |
| | gef.: | 55,19 % C; | 5,67 % H; | 14,26 % N | 5,24 % P |
| Schmelzpunkt: IR: | 174,5 °C (DSC-Onset), 180,5 °C (DSC-Peak) *v̅̃̅* (cm⁻¹) = 3352 (w); 2924 (w); 1650 (m); 1605 (w); 1532 (m); 1500 (vs); 1409 (s); 1366 (s); 1301 (w); 1280 (m); 1244 (w); 1218 (w); 1160 (vs); 1108 (w); 1067 (w); 1015 (w); 989 (s); 964 (vs); 930 (s); 884 (w); 832 (s); 752 (m); 583 (m) | | | | |
| ¹H-NMR (500,13 MHz, DMSO-d₆): | | δ (ppm) = 2.91 (s, 18 H, C*H₃*); 7.11 (d, 6 H, Ar-*H*, ³*J*_{HH} = 8.7 Hz); 7.49 (d, 6 H, Ar-H, ³*J*_{HH} = 9.0 Hz); 8.37 (s, 3 H, N*H*) | | | |
| ¹³C-NMR (125,77 MHz, DMSO-d₆): | | δ (ppm) = 36.20 (*C*H₃); 119.70 (d, Ar-*C*, ³*J*_{PC} = 4.6 Hz); 120.98 (Ar-*C*); 138.41 (Ar-*C*); 144.29 (d, Ar-*C*, ²*J*_{PC} = 7.3 Hz); 155.70 (*C*=O) | | | |
| ³¹P-NMR (202,46 MHz, DMSO-d₆): | | δ (ppm) = -15.94 (O=*P*(OAr)₃) | | | |

### Beispiel 4: Di[p-(dimethylcarbamoylamino)phenyl]phenyiphosphat (HA-IV)

HA-IV entspricht einer Verbindung gemäß Formel (I) mit m = 2; n = 1; p = 0; X = O; R¹ = R² = Methyl; R³ = -O-Phenyl; R⁶ = H, wobei sich die -NHC(O)NR¹R²-Gruppe in p-Stellung befindet.

In einem N₂-gespülten Dreihalskolben mit Rückflusskühler, Tropftrichter, Thermometer und Magnetrührer werden 28,83 g (160 mmol) *N*-(*p*-Hydroxyphenyl)-*N',N'*-dimethylharnstoff in 160 ml Acetonitril (100 %-ig, VWR) suspendiert, 16,19 g (160 mmol) Triethylamin (99,5 %-ig, Sigma-Aldrich) zugegeben und das entstehende Gemisch mittels Eisbad auf eine Temperatur von 0 °C gekühlt. Mittels Tropftrichter wird eine Lösung von 16,88 g (80 mmol) Phosphorsäurephenylesterdichlorid (97 %-ig, ABCR) in 80 ml Acetonitril so zugetropft, dass die Temperatur nicht über 5 °C steigt. Danach wird das Eisbad entfernt und das Reaktionsgemisch über Nacht bei Raumtemperatur gerührt. Der entstandene Feststoff wird abgetrennt, mit wenig Acetonitril nachgewaschen und an der Luft getrocknet. Dann wird der Feststoff in 200 ml Wasser suspendiert, bei 50 °C für 30°min gerührt, wieder abgetrennt und nochmals mit Wasser nachgewaschen. Anschließend trocknet man bei 60 °C im Vakuum.

| | | | | | |
|---|---|---|---|---|---|
| Ausbeute: | 34,95 g (88 %) | | | | |
| Elementaranalyse: | ber.: | 57,83 % C; | 5,46 % H; | 11,24 % N; | 6,21 % P |
| | gef.: | 57,79 % C; | 5,49 % H; | 11,39 % N; | 6,11 % P |
| Schmelzpunkt: | 204 °C (DSC-Onset), 208,5 °C (DSC-Peak) | | | | |
| IR: | *v̅̃̅* (cm⁻¹) = 3310 (w); 1656 (s); 1601 (w); 1531 (s); 1505 (s); 1488 (s); 1410 (m); 1374 (m); 1299 (s); 1246 (w); 1221 (w); 1181 (vs); 1161 (s); 1106 (w); 1075 (w); 1027 (w); 1011 (w); 975 (s); 956 (vs); 936 (m); 892 (w); 830 (s); 756 (s); 523 (s) | | | | |
| ¹H-NMR (500,13 MHz, DMSO-d₆): | | δ (ppm) = 2.91 (s, 12 H, C*H₃*); 7.12 (m, 4 H, Ar-*H*); 7.23 - 7.30 (m, 3 H, Ar-*H*); 7.44 (t, 2 H, Ar-*H*, ³*J*_{HH} = 8.0 Hz); 7.49 (d, 4 H, Ar-*H*, ³*J*_{HH} = 9.0 Hz); 8.37 (s, 2 H, N*H*) | | | |
| ¹³C-NMR (125,77 MHz, DMSO-d₆): | | δ (ppm) = 36.20 (*C*H₃); 119.67 (d, Ar-*C*, ³*J*_{PC} = 4.6 Hz); 119.92 (d, Ar-*C*, ³*J*_{PC} = 4.6 Hz); 120.95 (Ar-*C*); 125.78 (Ar-*C*); 130.19 (Ar-*C*); 138.46 (Ar-*C*); 144.17 (d, Ar-*C*, ²*J*_{PC} = 8.3 Hz); 149.99 (d, Ar-*C*, ²*J*_{PC} = 7.3 Hz); 155.66 (*C*=O) | | | |
| ³¹P-NMR (202,46 MHz, DMSO-d₆): | | δ (ppm) = -16.35 (O=*P*(OAr)₃) | | | |

### Beispiel 5: [p-(Dimethylcarbamoylamino)phenyl]diphenylphosphat (HA-V)

HA-V entspricht einer Verbindung gemäß Formel (I) mit m = 1; n = 2; p = 0; X = O; R¹ = R² = Methyl; R³ = -O-Phenyl; R⁶ = H, wobei sich die -NHC(O)NR¹R²-Gruppe in *p*-Stellung befindet.

In einem N₂-gespülten Dreihalskolben mit Rückflusskühler, Tropftrichter, Thermometer und Magnetrührer werden 28,83 g (160 mmol) *N*-(*p*-Hydroxyphenyl)-*N',N'*-dimethylharnstoff in 160 ml Acetonitril (100 %-ig, VWR) suspendiert, 16,19 g (160 mmol) Triethylamin (99,5 %-ig, Sigma-Aldrich) zugegeben und das entstehende Gemisch mittels Eisbad auf eine Temperatur von 0 °C gekühlt. Über einen Tropftrichter wird eine Lösung von 42,98 g (160 mmol) Phosphorsäurediphenylesterchlorid (97 %-ig, ABCR) in 80 ml Acetonitril so zugetropft, dass die Temperatur nicht über 5 °C steigt. Nach Entfernen des Eisbads wird das Gemisch für 90 min bei Raumtemperatur und danach noch einmal für 90 min bei einer Temperatur von 50 °C gerührt. Nach Abkühlen auf Raumtemperatur werden 400 ml Wasser zugegeben, wobei ein Zwei-Phasen-Gemisch entsteht. Die obere, wässrige Phase wird abgetrennt und die organische Phase mit 240 ml Wasser versetzt. Der dabei entstehende Feststoff wird abgetrennt, mit Wasser gewaschen und bei 60 °C im Vakuum getrocknet.

| | | | | | |
|---|---|---|---|---|---|
| Ausbeute: | 56,93 g (86 %) | | | | |
| Elementaranalyse: | ber.: | 61,16 % C; | 5,13 % H; | 6,79 % N; | 7,51 % P |
| | gef.: | 61,12 % C; | 5,09 % H; | 6,93 % N; | 7,38 % P |
| Schmelzpunkt: | 91 °C (DSC-Onset), 94 °C (DSC-Peak) | | | | |
| IR: | *v̅̃̅* (cm⁻¹) = 3258 (w); 2930 (w); 1639 (s); 1588 (w); 1543 (m); 1507 (s); 1485 (s); 1455 (m); 1415 (m); 1377 (m); 1311 (s); 1302 (s); 1223 (w); 1183 (vs); 1157 (vs); 1068 (w); 1024 (m); 1017 (m); 1008 (m); 976 (s); 949 (vs); 927 (vs); 902 (s); 828 (s); 768 (s); 750 (s); 684 (s); 513 (vs) | | | | |
| ¹H-NMR (500,13 MHz, DMSO-d₆): | | δ (ppm) = 2.91 (s, 6 H, C*H₃*); 7.14 (m, 2 H, Ar-*H*); | | | |
| | | 7.23 - 7.31 (m, 6 H, Ar-*H*); 7.44 (t, 4 H, Ar-*H*, ³*J*_{HH} = 7.7 Hz); 7.50 (d, 2 H, Ar-*H*, ³*J*_{HH} = 9.0 Hz); 8.38 (s, 1 H, N*H*) | | | |
| ¹³C-NMR (125,77 MHz, DMSO-d₆): | | δ (ppm) = 36.17 (CH₃); 119.69 (d, Ar-*C*, ³*J*_{PC} = 4.6 Hz); 119.91 (d, Ar-*C*, ³*J*_{PC} = 4.6 Hz); 120.97 (Ar-*C*); 125.84 (Ar-*C*); 130.20 (Ar-*C*); 138.56 (Ar-*C*); 144.12 (d, Ar-*C*, ²*J*_{PC} = 7.3 Hz); 149.93 (d, Ar-*C*, ²*J*_{PC} = 7.3 Hz); 155.67 (*C*=O) | | | |
| ³¹P-NMR (202,46 MHz, DMSO-d₆): | | δ (ppm) = -16.74 (O=*P*(OAr)₃) | | | |

### Beispiel 6: Di[p-(dimethylcarbamoylamino)phenyl]phenylphosphonat (HA-VI)

HA-VI entspricht einer Verbindung gemäß Formel (I) mit m = 2; n = 1; p = 0; X = O; R¹ = R² = Methyl; R³ = Phenyl; R⁶ = H, wobei sich die -NHC(O)NR¹R²-Gruppe in p-Stellung befindet.

In einem N₂-gespülten Dreihalskolben mit Rückflusskühler, Tropftrichter, Thermometer und Magnetrührer werden 3,60 g (20 mmol) *N*-(*p*-Hydroxyphenyl)-*N',N'*-dimethylharnstoff in 20 ml Acetonitril (100 %-ig, VWR) vorgelegt, 2,02 g (20 mmol) Triethylamin (99,5 %-ig, Sigma-Aldrich) zugegeben und das entstehende Reaktionsgemisch mittels Eisbad auf eine Temperatur von 0 °C gekühlt. Mittels Tropftrichter wird eine Lösung von 1,95 g (10 mmol) Phenylphosphonsäuredichlorid (zur Synthese, Merck) in 10 ml Acetonitril so zugetropft, dass die Temperatur nicht über 5 °C steigt. Danach wird das Eisbad entfernt und das Reaktionsgemisch über Nacht bei Raumtemperatur gerührt. Das Reaktionsgemisch wird mit 150 ml Wasser verdünnt. Der anfallende Feststoff wird abgetrennt, mit wenig Wasser nachgewaschen und bei 60 °C im Vakuum getrocknet.

| | | | | | |
|---|---|---|---|---|---|
| Ausbeute: | 3,91 g (81 %) | | | | |
| Elementaranalyse: | ber.: | 59,75 % C; | 5,64 % H; | 11,61 % N; | 6,42 % P |
| | gef.: | 59,31 % C; | 5,70 % H; | 11,49 % N; | 6,36 % P |
| Schmelzpunkt: | 195 °C (DSC-Onset) , 200 °C (DSC -Peak) | | | | |
| IR: | *v̅̃̅* (cm⁻¹) = 3266 (w); 2923 (w); 1652 (s); 1603 (w); 1532 (s); 1504 (s); 1440 (m); 1410 (m); 1372 (s); 1305 (m); 1266 (m), 1184 (vs); 1162 (s); 1069 (w); 1015 (w); 939 (s); 918 (vs); 891 (m); 854 (m); 828 (vs); 756 (s); 559 (s); 519 (vs) | | | | |
| ¹H-NMR (500,13 MHz, DMSO-d₆): | | δ (ppm) = 2.89 (s, 12 H, C*H₃*); 7.03 (m, 4 H, Ar-*H*); 7.36 - 7.44 (m, 4 H, Ar-*H*); 7.53 - 7.61 (m, 2 H, Ar-*H*); 7.65 - 7.71 (m, 1 H, Ar-*H*); 7.83 - 7.93 (m, 2 H, Ar-*H*); 8.29 (s, 2 H, N*H*) | | | |
| ¹³C-NMR (125,77 MHz, DMSO-d₆): | | δ (ppm) = 36.17 (*C*H₃); 120.12 (d, O-Ar-*C*, ³*J*_{PC} = 3.7 Hz); 120.92 (O-Ar-*C*); 126.32 (d, P-Ar-*C*, ¹*J*_{PC} = 188.8 Hz); 128.96 (d, P-Ar-*C*, ³*J*_{PC} =15.6 Hz); 132.07 (d, P-Ar-*C*, ²*J*_{PC} = 10.1 Hz); 133.50 (d, P-Ar-*C*, ⁴*J*_{PC} = 2.8 Hz); 137.93 (O-Ar-*C*); 144.16 (d, O-Ar-*C*, ²*J*_{PC} = 7.3 Hz); 155.67 (*C*=O) | | | |
| ³¹P-NMR (202,46 MHz, DMSO-d₆): | | δ (ppm) = 12.31 (t, O=P(Ar)(OAr)₂, ³*J*_{PH} =13.2 Hz) | | | |

### Beispiel 7: [p-(Dimethylcarbamoylamino)phenyl]diphenylphosphinat (HA-VII)

HA-VII entspricht einer Verbindung gemäß Formel (I) mit m = 1; n = 2; p = 0; X = O; R¹ = R² = Methyl; R³ = Phenyl; R⁶ = H, wobei sich die -NHC(O)NR¹R²-Gruppe in p-Stellung befindet.

In einem N₂-gespülten Dreihalskolben mit Rückflusskühler, Tropftrichter, Thermometer und Magnetrührer werden 3,60 g (20 mmol) *N*-(*p*-Hydroxyphenyl)-*N',N'*-dimethylharnstoff in 20 ml Acetonitril (100 %-ig, VWR) vorgelegt, 2,02 g (20 mmol) Triethylamin (99,5 %-ig, Sigma-Aldrich) zugegeben und das entstehende Reaktionsgemisch mittels Eisbad auf eine Temperatur von 0 °C gekühlt. Mittels Tropftrichter wird eine Lösung von 4,72 g (20 mmol) Diphenylphosphinsäurechlorid (98 %-ig, Acros Organics) in 10 ml Acetonitril so zugetropft, dass die Temperatur nicht über 5 °C steigt. Danach wird das Eisbad entfernt und das Reaktionsgemisch über Nacht bei Raumtemperatur gerührt. Das Reaktionsgemisch wird mit 50 ml Wasser verdünnt. Der anfallende Feststoff wird abgetrennt, mit wenig Wasser nachgewaschen und bei 60 °C im Vakuum getrocknet.

| | | | | | | |
|---|---|---|---|---|---|---|
| Ausbeute: | 6,35 g (83 %) | | | | | |
| Elementaranalyse: | ber.: | 66,31 % C; | | 5,56 % H; | 7,36 % N; | 8,14 % P |
| | gef.: | 66,30 % C; | | 5,50 % H; | 7,43 % N; | 8,26 % P |
| Schmelzpunkt: | 222 °C (DSC-Onset), 223,5 °C (DSC-Peak) | | | | | |
| IR: | *v̅̃̅* (cm⁻¹) = 3312 (w); 3061 (w); 2921 (w); 1658 (s); 1601 (w); 1532 (m); 1505 (s); 1484 (m); 1439 (m); 1410 (m); 1370 (m); 1305 (w); 1293(w); 1229 (s); 1190 (s); 1166 (s); 1128 (s); 1112 (s); 1072 (w); 1017 (w); 996 (w); 955 (w); 922 (vs); 839 (s); 817 (w); 725 (vs); 687 (s); 585 (vs); 538 (s); 527 (vs) | | | | | |
| ¹H-NMR (500,13 MHz, DMSO-d₆): | | | δ (ppm) = 2.87 (s, 6 H, C*H₃*); 7.09 - 7.13 (m, 2 *H*, Ar-*H*); 7.30 - 7.38 (m, 2 H, Ar-*H*); 7.49 - 7.56 (m, 4 *H*, Ar-*H*); 7.56 - 7.64 (m, 2 *H*, Ar-*H*); 7.82 - 7.93 (m, 4 *H*, Ar-*H*); 8.22 (s, 1 *H*, N*H*) | | | |
| ¹³C-NMR (125,77 MHz, DMSO-d₆): | | | δ (ppm) = 36.14 (*C*H₃); 120.30 (d, O-Ar-*C*, ³*J*_{PC} = 4,6 Hz); 120.89 (O-Ar-*C*); 128.83 (d, P-Ar-*C*, ³*J*_{PC} =12.8 Hz); 130.89 (d, P-Ar-*C*, ¹*J*_{PC} = 136.6 Hz); 131.52 (d, P-Ar-*C*, ²*J*_{PC} = 10.1 Hz); 132.61 (d, P-Ar-*C*, ⁴*J*_{PC} = 2.8 Hz); 137.38 (O-Ar-*C*); 144.95 (d, O-Ar-*C*, ²*J*_{PC} = 8,3 Hz); 155.67 (*C*=O) | | | |
| ³¹P-NMR (202,46 MHz, DMSO-d₆): | | | δ (ppm) = 29.01 (t, O=*P*(Ar)₂(OAr), ³*J*_{PH} =11.7 Hz) | | | |

### Beispiel 8: Tri[m-(dimethylcarbamoylamino)phenyl]phosphat (HA-VIII)

HA-VIII entspricht einer Verbindung gemäß Formel (I) mit m = 3; n = p = 0; X = O; R¹ = R² = Methyl; R⁶ = H, wobei sich die -NHC(O)NR¹R²-Gruppe in m-Stellung befindet.

### a) Herstellung von N-(m-Hydroxyphenyl)-N',N'-dimethylharnstoff

Die Herstellung von *N*-(m-Hydroxyphenyl)-*N',N'*-dimethylharnstoff erfolgt, wie im Patent EP 0 108 712 A1 beschrieben, unter Verwendung von 50,00 g (0,458 mol) *m*-Aminophenol (99 %-ig, Merck), 37,10 g (0,345 mol) *N,N*-Dimethylcarbamoylchlorid (98 %-ig, Aldrich) und 325 ml Tetrahydrofuran (99,8 %-ig, Merck).

| | |
|---|---|
| Ausbeute: | 34,67 g (56 %) |
| Elementaranalyse: | ber.: 59,99 % C; 6,71 % H; 15,55 % N |
| | gef.: 59,92 % C; 6,67 % H; 15,37 % N |
| Schmelzpunkt: | 193 °C (DSC-Onset), 196,5 °C (DSC-Peak) |
| IR: | *v̅̃̅* (cm⁻¹) = 3369 (w); 3088 (w); 1633 (m); 1602 (m); 1537 (s); 1484 (s); 1437 (vs); 1376 (s); 1270 (s); 1231 (m); 1203 (vs); 1168 (s); 1157 (s); 1065 (m); 1031 (w); 972 (m); 871 (m); 853 (m); 777 (s); 765 (s); 740 (s); 692 (s); 610 (s) |

### b) Herstellung von HA-VIII

In einem N₂-gespültem Dreihalskolben mit Rückflusskühler, Tropftrichter, Thermometer und Magnetrührer werden 8,11 g (45 mmol) *N*-(*m*-Hydroxyphenyl)-*N',N'-*dimethylharnstoff in 50 ml Acetonitril (100 %-ig, VWR) vorgelegt, 4,55 g (45 mmol) Triethylamin (99,5 %-ig, Sigma-Aldrich) zugegeben und das entstehende Reaktionsgemisch mittels Eisbad auf eine Temperatur von 0 °C gekühlt. Mittels Tropftrichter wird eine Lösung von 2,30 g (15 mmol) Phosphorylchlorid (zur Synthese, Merck) in 25 ml Acetonitril so zugetropft, dass die Temperatur nicht über 5 °C steigt. Danach wird das Eisbad entfernt und das Reaktionsgemisch 30 min bei Raumtemperatur weitergerührt. Anschließend wird das Reaktionsgemisch für 2 h bei 60 °C gerührt. Nach Abkühlung auf Raumtemperatur wird der vorhandene Feststoff abgetrennt. Das Filtrat wird am Rotationsverdampfer bis zur Trockene eingeengt und danach in 100 ml Aceton aufgenommen. Unlösliche Bestandteile werden abgetrennt und dann wird das Filtrat wieder unter Vakuum zur Trockene eingeengt. Der so erhaltene Feststoff wird bei 60 °C im Vakuum getrocknet.

| | | | | | |
|---|---|---|---|---|---|
| Ausbeute: | 8,48 g (97 %) | | | | |
| Elementaranalyse: | ber.: | 55,48 % C; | 5,69 % H; | 14,38 % N | 5,30°% P |
| | gef.: | 55,57 % C; | 5,74 % H; | 14,11 % N | 5,00 % P |
| Schmelzpunkt: | > 250 °C | | | | |
| IR: | *v̅̃̅* (cm⁻¹) = 3312 (w); 2928 (w); 1644 (m); 1595 (m); 1530 (m); 1480 (s); 1427 (m); 1367 (m); 1274 (m); 1252 (m); 1182 (s); 1132 (s); 1007 (s); 976 (vs); 914 (s); 860 (m); 777 (m); 755 (m); 683 (m); 606 (m); 553 (m) | | | | |
| ¹H-NMR (500,13 MH z, DMSO-d₆): | | | δ (ppm) = 2.91 (s, 18 H, C*H₃*); 7.11 (d, 6 H, Ar-*H*, ³*J*_{HH} = 8.7 Hz); 7.49 (d, 6 H, Ar-H*,* ³*J*_{HH} = 9.0 Hz); 8.37 (s, 3 H, N*H*) | | |
| ¹³C-NMR (125,77 MHz, DMSO-d₆): | δ (ppm) = 36.20 (CH₃); 119.70 (d, Ar-C, ³*J*_{PC} = 4.6 Hz); 120.98 (Ar-C); 138.41 (Ar-C); 144.29 (d, Ar-C, ²*J*_{PC} = 7.3 Hz); 155.70 (*C*=O) | | | | |
| ³¹P-NMR (202,46 MHz, DMSO-d₆): | δ (ppm) = -15.94 (O=*P*(OAr)₃) | | | | |

### Beispiel 9: Tri[o-(dimethylcarbamoylamino)phenyl]phosphat (HA-IX)

HA-IX entspricht einer Verbindung gemäß Formel (I) mit m = 3; n = p = 0; X = O; R¹ = R² = Methyl; R⁶ = H, wobei sich die -NHC(O)NR¹R²-Gruppe in o-Stellung befindet.

### a) Herstellung von N-(o-Hydroxyphenyl)-N',N'-dimethylharnstoff

Die Herstellung von *N*-(*o*-Hydroxyphenyl)-*N*',*N*'-dimethylharnstoff erfolgt analog zur Herstellung von *N*-(*m*-Hydroxyphenyl)-*N'*,*N'*-dimethylharnstoff [siehe Beispiel 8 a)], wobei *m*-Aminophenol durch *o*-Aminophenol (99 %-ig, Aldrich) ersetzt wird.

| | | | | |
|---|---|---|---|---|
| Ausbeute: | 34,70 g (56 %) | | | |
| Elementaranalyse: | ber.: | 59,99 % C; | 6,71 % H; | 15,55 % N |
| | gef.: | 59,95 % C; | 6,62 % H; | 15,59 % N |
| Schmelzpunkt: | 137 °C (DSC-Onset), 139,5 °C (DSC-Peak) | | | |
| IR: | *ṽ* (cm⁻¹) = 3430 (w); 3058 (w); 1644 (m); 1594 (m); 1538 (s); 1486 (s); 1451 (s); 1416 (s); 1366 (s); 1324 (s); 1280 (s); 1237 (s); 1201 (s); 1154 (m); 1103 (m); 1069 (m); 1030 (m); 923 (w); 889 (w); 807 (w); 748 (vs); 647 (w); 609 (m); 550 (s) | | | |

### b) Herstellung von HA-IX

In einem N₂-gespülten Dreihalskolben mit Rückflusskühler, Tropftrichter, Thermometer und Magnetrührer werden 8,11 g (45 mmol) *N*-(*o*-Hydroxyphenyl)-*N*',*N*'-dimethylharnstoff in 50 ml Acetonitril (100 %-ig, VWR) vorgelegt, 4,55 g (45 mmol) Triethylamin (99,5 %-ig, Sigma-Aldrich) zugegeben und das entstehende Reaktionsgemisch mittels Eisbad auf eine Temperatur von 0 °C gekühlt. Mittels Tropftrichter wird eine Lösung von 2,30 g (15 mmol) Phosphorylchlorid (zur Synthese, Merck) in 25 ml Acetonitril so zugetropft, dass die Temperatur nicht über 5 °C steigt. Danach wird das Eisbad entfernt und das Reaktionsgemisch 30 min bei Raumtemperatur weitergerührt. Anschließend wird das Reaktionsgemisch für 2 h bei 60 °C gerührt. Nach Abkühlung auf Raumtemperatur wird der vorhandene Feststoff abgetrennt und in 50 ml Wasser suspendiert. Die Suspension wird für 1 h bei Raumtemperatur gerührt, danach der Feststoff wieder abgetrennt, mit Wasser gewaschen und bei 60 °C im Vakuum getrocknet.

| | | | | | |
|---|---|---|---|---|---|
| Ausbeute: | 6,08 g (69 %) | | | | |
| Elementaranalyse: | ber.: | 55,48 % C; | 5,69 % H; | 14,38 % N | 5,30 % P |
| | gef.: | 55,50 % C; | 5,57 % H; | 14,30 % N | 5,07 % P |
| Schmelzpunkt: | 159 °C (DSC-Onset), 160 °C (DSC-Peak) | | | | |
| IR: | ṽ (cm⁻¹) = 3318 (w); 2924 (w); 1677 (m); 1637 (s); 1596 (m); 1525 (s); 1489 (s); 1439 (s); 1375 (s); 1296 (s); 1273 (s); 1251 (s); 1172 (vs); 1099 (s); 1067 (w); 1041 (m); 989 (s); 969 (vs); 936 (s); 887 (w); 847 (s); 750 (vs); 642 (m) | | | | |
| ¹H-NMR (500,13 MHz,DMSO-d₆): | | δ (ppm) = 2.74 (s, 18 H, C*H*₃); 7.09 (m, 3 H, Ar-*H*); 7.20 (t, 3 H, Ar-H, ³*J*_{HH} = 7.5 Hz); 7.28 (d, 3 H, Ar-H, ³*J*_{HH} = 8.0 Hz); 7.60 (d, 3 H, Ar-H, ³*J*_{HH} = 8.0 Hz); 7.81 (s, 3 H, NH) | | | |
| ¹³C-NMR (125,77 MHz, DMSO-d₆): | | δ (ppm) = 35.85 (CH₃); 119.98 (d, Ar-C, ³*J*_{PC} = 1.8 Hz); 124.35 (Ar-C); 125.70 (Ar-C); 131.22 (d, Ar-C, ³*J*_{PC} = 6.4 Hz); 142.43 (d, Ar-C, ²*J*_{PC} = 7.3 Hz); 155.47 (*C*=O) | | | |
| ³¹P-NMR (202,46 MHz,DMSO-d₆): | | δ (ppm) = -16.72 (O=*P*(OAr)₃) | | | |

### Beispiel 10: Tri[4-(dimethylcarbamoylamino)-3-methylphenyl]phosphat (HA-X)

HA-IX entspricht einer Verbindung gemäß Formel (I) mit m = 3; n = p = 0; X = O; R¹ = R² = R⁶ = Methyl, wobei sich die -NHC(O)NR¹R²-Gruppe in 4-Position und R⁶ in 3-Position des aromatischen Rings befinden.

### a) Herstellung von N-(4-Hydroxy-2-methylphenyl)-N',N'-dimethylharnstoff

Die Herstellung von *N*-(4-Hydroxy-2-methylphenyl)-*N*',*N*'-dimethylharnstoff erfolgt analog zur Herstellung von *N*-(*m*-Hydroxyphenyl)-*N*',*N*'-dimethylharnstoff [siehe Beispiel 8a)], wobei *m*-Aminophenol durch 4-Amino-3-methylphenol (98 %-ig, Alfa-Aesar) ersetzt wird.

| | | | | |
|---|---|---|---|---|
| Ausbeute: | 16,17 g (59 %) | | | |
| Elementaranalyse: | ber.: | 61,84 % C; | 7,27 % H; | 14,42 % N |
| | gef.: | 61,75 % C; | 7,12 % H; | 14,29 % N |
| Schmelzpunkt: | 221 °C (DSC-Onset), 227 °C (DSC-Peak) | | | |
| IR: | ṽ (cm⁻¹) = 3354 (w); 3161 (w); 2923 (w); 1591 (m); 1531 (s); 1461 (s); 1372 (m); 1294 (m); 1225 (vs); 1191 (m); 1158 (m); 1101 (m); 1064 (m); 1041 (w); 1002 (w); 951 (w); 880 (m); 815 (m); 752 (s); 630 (w); 556 (m) | | | |

### b) Herstellung von HA-X

In einem N₂-gespülten Dreihalskolben mit Rückflusskühler, Tropftrichter, Thermometer und Magnetrührer werden 6,41 g (33 mmol) *N*-(4-Hydroxy-2-methylphenyl)-*N*',*N*'-dimethylharnstoff in 40 ml Acetonitril (100 %-ig, VWR) vorgelegt, 3,34 g (33 mmol) Triethylamin (99,5 %-ig, Sigma-Aldrich) zugegeben und das entstehende Reaktionsgemisch mittels Eisbad auf eine Temperatur von 0 °C gekühlt. Mittels Tropftrichter wird eine Lösung von 1,69 g (11 mmol) Phosphorylchlorid (zur Synthese, Merck) in 15 ml Acetonitril so zugetropft, dass die Temperatur nicht über 5 °C steigt. Danach wird das Eisbad entfernt und das Reaktionsgemisch 30 min bei Raumtemperatur weitergerührt. Anschließend wird das Reaktionsgemisch für 2 h bei 60 °C gerührt. Nach Abkühlung auf Raumtemperatur wird der vorhandene Feststoff abgetrennt. Das Filtrat wird am Rotationsverdampfer bis zur Trockene eingeengt und danach in 30 ml Aceton aufgenommen. Unlösliche Bestandteile werden abgetrennt und dann wird das Filtrat wieder unter Vakuum zur Trockene eingeengt. Der so erhaltene Feststoff wird bei 60 °C im Vakuum getrocknet.

| | | | | | |
|---|---|---|---|---|---|
| Ausbeute: | 5,58 g (81 %) | | | | |
| Elementaranalyse: | ber.: | 57,50 % C; | 6,27 % H; | 13,41 % N | 4,94 % P |
| | gef.: | 57,34 % C; | 6,23 % H; | 12,78 % N | 4,52 % P |
| Schmelzpunkt: | > 250 °C | | | | |
| IR: | ṽ (cm⁻¹) = 3287 (w); 2927 (w); 1639 (m); 1494 (s); 1412 (m); 1366 (m); 1291 (m); 1267 (m); 1199 (s); 1143 (vs); 1111 (m); 1067 (w); 1007 (s); 968 (vs); 914 (m); 893 (m); 869 (m); 812 (m); 758 (m); 708 (w); 600 (m); 558 (m) | | | | |
| ¹H-NMR (500,13 MHz, DMSO-d₆): | | δ (ppm) = 2.91 (s, 18 H, C*H*₃); 7.11 (d, 6 H, Ar-H, ³*J*_{HH} = 8.7 Hz); 7.49 (d, 6 H, Ar-H, ³*J*_{HH} = 9.0 Hz); 8.37 (s, 3 H, NH) | | | |
| ¹³C-NMR (125,77 MHz,DMSO-d₆): | | δ (ppm) = 36.20 (CH₃); 119.70 (d, Ar-*C*, ³*J*_{PC} = 4.6 Hz); 120.98 (Ar-C); 138.41 (Ar-*C*); 144.29 (d, Ar-*C*, ²*J*_{PC} = 7.3 Hz); 155.70 (*C*=O) | | | |
| ³¹P-NMR (202,46 MHz,DMSO-d₆): | | δ (ppm) = -15.94 (O=*P*(OAr)₃) | | | |

### 3) Epoxidharz-Zusammensetzungen mit erfindungsgemäßen Härtern / Härtungsbeschleunigern und Zubereitung der Formulierungen

Die Erfindung wird am Beispiel der in Tabelle 1 aufgeführten Formulierungen von Epoxidharz-Zusammensetzungen gezeigt.

**Tabelle 1: Verwendete Epoxidharz-Zusammensetzungen**

| Beispiel (erfindungsgemäß) | Komponenten der Formulierung (Gewichtsteile) | | |
|---|---|---|---|
| A (nein) | ER (100) | HA (8) | |
| B (ja) | ER (100) | HA-I (8) | |
| C (nein) | ER (100) | H (6,5) | HA (3) |
| D (ja) | ER (100) | H (6,5) | HA-I (3) |
| E (ja) | ER (100) | H (6,5) | HA-III (5) |
| F (ja) | ER (100) | H (6,5) | HA-IV (5) |
| G (ja) | ER (100) | H (6,5) | HA-V (5) |
| H (ja) | ER (100) | H (6,5) | HA-VI (5) |
| I (ja) | ER (100) | H (6,5) | HA-VII (5) |
| J (ja) | ER (100) | HA-III (8) | |
| K (ja) | ER (100) | HA-IV (8) | |
| L (ja) | ER (100) | HA-VI (8) | |

Für DSC-Untersuchungen und Bestimmungen von Latenzen werden die unter dem jeweiligen Beispiel genannten Komponenten in einer Reibschale innig miteinander vermischt.

Für Untersuchungen zur Flammschutzwirkung erfolgt die Mischung der einzelnen Komponenten einer Formulierung in einem Dissolver. Dazu werden die Komponenten in ein 1-L-Dissolver-Gefäß eingewogen und die Mischung im Dissolver für 2 min bei 900 U/min, danach für 2 min bei 3000 U/min und abschließend für 3 min bei 3500 U/min dispergiert. Danach wird die Mischung für 60 min bei 60 U/min unter Vakuum entgast. Die Formulierung ist gebrauchsfertig, wenn sich an der Oberfläche keine erkennbaren Blasen mehr befinden.

Aus den so hergestellten Formulierungen werden gehärtete Platten mit den Maßen 4 mm x 180 mm x 350 mm hergestellt, aus denen die für die Untersuchungen zum Brandverhalten erforderlichen Prüfkörper mit einer CNC-Fräse ausgefräst werden. Die für die Herstellung der Platten verwendeten Bedingungen (1. Schritt: Härtung, 2. Schritt: Temperung) für die einzelnen Formulierungen sind in Tabelle 2 angegeben.

**Tabelle 2: Bedingungen zur Herstellung von gehärteten Platten der Beispielformulierungen**

| Beispiel (erfindungsgemäß) | Härtung | | Temperung | |
|---|---|---|---|---|
| | Temperatur [°C] | Zeit [h] | Temperatur [°C] | Zeit [h] |
| A (nein) | 95 | 3 | 100 | 2 |
| B (ja) | 100 | 4 | 115 | 2 |
| C (nein) | 100 | 2 | 140 | 2 |
| D (ja) | 100 | 2,5 | 140 | 2 |
| E (ja) | 95 | 2,5 | 130 | 2 |
| F (ja) | 105 | 3 | 140 | 2 |
| G (ja) | 115 | 3 | 125 | 2 |

### 4) DSC-Untersuchungen

Die Wirksamkeit der erfindungsgemäßen Verbindungen als Härter / Härtungsbeschleuniger wird am Beispiel von HA-I im Vergleich zu HA, einem gängigen Härter / Härtungsbeschleuniger, gezeigt.

Dazu werden charakteristische Daten aus DSC-Messungen herangezogen. Die unten beschriebenen DSC-Messungen werden an einem dynamischen Wärmestromdifferenz-Kalorimeter DSC 1 oder DSC 822e (Mettler Toledo) durchgeführt.

### a) Dynamische DSC:

Eine Probe der Formulierung wird mit einer Heizrate von 10 K/min von 30 - 250 °C aufgeheizt. Die Auswertung des exothermen Reaktionspeaks erfolgt durch Bestimmung der Onset-Temperatur (T_{Onset}), der Temperatur im Peak-Maximum (T_{Max}) sowie der Peakfläche als Maß für die freigesetzte Reaktionswärme (Δ_{R}H).

### b) T_{G}-Bestimmung:

Für die Bestimmung der maximalen Glasübergangstemperatur (End-T_{G}) wird eine Probe der ausgehärteten Formulierung folgendem DSC-Temperaturprogramm unterworfen: Aufheizen von 30 - 200 °C mit 20 K/min, 10 min Halten bei 200 °C, Abkühlen von 200 - 50 °C mit 20 K/min, 5 min Halten bei 50 °C, Aufheizen von 50 - 200 °C mit 20 K/min, 10 min Halten bei 200 °C, Abkühlen von 200 - 50 °C mit 20 K/min, 5 min Halten bei 50 °C, Aufheizen von 50 - 220 °C mit 20 K/min. Aus den beiden letzten Aufheizzyklen wird jeweils durch Anlegen einer Tangente im Wendepunkt der größten Änderung der Wärmekapazität (ΔCₚ) die Glasübergangstemperatur bestimmt und der Mittelwert als End-T_{G} angegeben.

### c) Isotherme DSC:

Eine Probe der Formulierung wird bei der angegebenen Temperatur für die angegebene Zeit konstant gehalten (isotherme Härtung der Formulierung). Die Auswertung erfolgt durch Bestimmung der Zeit des Peak-Maximums (als Maß für das Anspringen des Aushärtevorgangs) sowie des 90 %-Umsatzes (als Maß für das Ende des Aushärtevorgangs) des exothermen Reaktionspeaks.

Die Ergebnisse der DSC-Untersuchungen sind in Tabelle 3 und Tabelle 4 zusammengefasst.

**Tabelle 3: Ergebnisse der dynamischen DSC und T_{G}-Bestimmung**

| Beispiel (erfindungsgemäß) | T_{Onset} [°C] | T_{Max} [°C] | Δ_{R}H [J/g] | End-T_{G} [°C] |
|---|---|---|---|---|
| A (nein) | 153 | 175 | 544 | 98 |
| B (ja) | 156 | 181 | 543 | 111 |
| C (nein) | 137 | 144 | 477 | 137 |
| D (ja) | 145 | 153 | 509 | 147 |
| E (ja) | 143 | 152 | 475 | 137 |
| F (ja) | 151 | 159 | 457 | 142 |
| G (ja) | 150 | 170 | 575 | 136 |
| H (ja) | 148 | 157 | 483 | 136 |
| I (ja) | 150 | 159 | 451 | 136 |
| J (ja) | 154 | 177 | 355 | 112 |
| K (ja) | 152 | 176 | 223 | 98 |
| L (ja) | 162 | 185 | 256 | 100 |

**Tabelle 4: Ergebnisse der isothermen DSC**

| Beispiel (erfindungsgemäß) | Bedingungen | Peak-Maximum [min] | 90 %-Umsatz [min] |
|---|---|---|---|
| A (nein) | 140 °C, 120 min | 7,5 | 26,5 |
| B (ja) | 140 °C, 120 min | 9,4 | 47,8 |
| C (nein) | 140 °C, 60 min | 1,4 | 12,5 |
| D (ja) | 140 °C, 60 min | 2,7 | 11,9 |
| E (ja) | 140 °C, 60 min | 2,5 | 13,2 |
| F (ja) | 140 °C, 60 min | 3,9 | 17,2 |
| G (ja) | 140 °C, 180 min | 4,4 | 73,3 |
| H (ja) | 140 °C, 60 min | 3,2 | 18,9 |
| I (ja) | 140 °C, 60 min | 4,0 | 23,0 |
| J (ja) | 140 °C, 60 min | 8,3 | 35,9 |
| K (ja) | 140 °C, 90 min | 7,2 | 51,6 |
| L (ja) | 140 °C, 120 min | 9,3 | 65,9 |

Der Vergleich der erfindungsgemäßen Beispiele mit einem technisch üblichen Härter / Härtungsbeschleuniger wie HA (Beispiele A und C) zeigt, dass bei der Verwendung der erfindungsgemäßen Härter bzw. Härtungsbeschleuniger vergleichbare charakteristische Werte für den Aushärtevorgang mittels DSC ermittelt werden können. Die Werte für T_{Onset} und T_{Max} aus den dynamischen DSC-Messungen sind für Formulierungen mit den erfindungsgemäßen Härtern / Härtungsbeschleunigern etwas höher als bei Verwendung von HA (Beispiele A bzw. C), d. h. die Aushärtung ist bei Verwendung der erfindungsgemäßen Härter / Härtungsbeschleuniger geringfügig langsamer. Die bei der Aushärtung freiwerdende Energie Δ_{R}H liegt bei allen Formulierungen in derselben Größenordnung, was zeigt, dass bei allen getesteten Formulierungen tatsächlich eine Härtung stattfindet. Bei Verwendung der erfindungsgemäßen Härter / Härtungsbeschleuniger ist die erreichbare Glasübergangstemperatur im Vergleich zur jeweiligen Formulierung mit dem technisch üblichen Härter / Härtungsbeschleuniger mindestens vergleichbar und in einigen Beispielen deutlich höher (Beispiele B, D, F, J und L).

Bei den isothermen DSC-Messungen sind die Ergebnisse ebenfalls vergleichbar. Hier wird das Peak-Maximum bei isothermer Aushärtung in den erfindungsgemäßen Formulierungen zwar etwas später erreicht, jedoch sind diese Unterschiede nicht signifikant. Die Zeit bis zu einem Reaktionsumsatz von 90 % ist bei der Verwendung der erfindungsgemäßen Härter / Härtungsbeschleuniger im Vergleich zum technisch üblichen Härter / Härtungsbeschleuniger HA zwar teilweise etwas länger, jedoch technisch noch vertretbar.

Zusammenfassend zeigen die DSC-Untersuchungen, dass die erfindungsgemäßen Verbindungen analog zu bereits bekannten Härtern / Härtungsbeschleunigern eingesetzt werden können und dabei eine ähnliche Härtungscharakteristik zeigen.

### 5) Flammschutzwirkung

Die Flammschutzwirkung der erfindungsgemäßen Verbindungen wird am Beispiel von HA-I im Vergleich zu HA, einem gängigen Härter / Härtungsbeschleuniger, gezeigt. Für die nachstehend genannten Untersuchungen werden Prüfkörper aus gehärteten Formulierungen verwendet. Es werden folgende Brandprüfungen durchgeführt:
a) Sauerstoff-Index:
   Die Bestimmung des Sauerstoff-Index (auch Limiting Oxygen Index, LOI) erfolgt gemäß DIN EN ISO 4589-2 (Kunststoffe - Bestimmung des Brennverhaltens durch den Sauerstoff-Index - Teil 2: Prüfung bei Umgebungstemperatur). Die Prüfungen werden mit Prüfkörpern der Abmessung 100 mm x 10 mm x 4 mm (Prüfkörper-Typ III) nach Entzündungsverfahren A durchgeführt.
b) Kleinbrennertest:
   Der Kleinbrennertest erfolgt gemäß UL 94 V (Tests for Flammability of Plastic Materials for Parts in Devices and Applications). Die Prüfungen werden mit je 5 Prüfkörpern der Abmessung 127 mm x 13 mm x 4 mm durchgeführt.

Die Ergebnisse der einzelnen Brandprüfungen sind in Tabelle 5 und Tabelle 6 zusammengefasst.

**Tabelle 5: Ergebnisse der Sauerstoff-Index-Bestimmungen**

| Beispiel (erfindungsgemäß) | Sauerstoff-Index [Vol.-%] |
|---|---|
| A (nein) | 21,1 |
| B (ja) | 26,7 |
| C (nein) | 20,7 |
| D (ja) | 22,3 |
| E (ja) | 23,2 |
| F (ja) | 23,0 |
| G (ja) | 22,3 |

Der Sauerstoffindex gibt an, welcher Sauerstoffgehalt (in Vol.-%) in einem Sauerstoff-Stickstoff-Gasgemisch mindestens erforderlich ist, dass ein entzündeter Prüfkörper nach Entfernen der Zündquelle weiter brennt. Ist der Sauerstoff-Index größer als der in der Normalatmosphäre vorhandene Sauerstoffgehalt von ca. 21 Vol.-%, wird ein Selbstverlöschen der geprüften Materialien beobachtet und somit eine flammhemmende Wirkung gezeigt. Für die Materialien entsprechend den Beispielen A und C (nicht erfindungsgemäß) wurden Sauerstoff-Index-Werte von 21,1 Vol.-% bzw. 20,7 Vol.-% ermittelt. In der Normalatmosphäre (Sauerstoffgehalt ca. 21 Vol.-%) wird hier ein anhaltendes Weiterbrennen nach der Entzündung mittels Brennerflamme festgestellt. Ein höherer Wert wird für die Beispiele D, E, F und G (erfindungsgemäß, enthaltend HA-I, HA-III, HA-IV bzw. HA-V als Härtungsbeschleuniger) festgestellt. Das beste Ergebnis wird für Beispiel B (erfindungsgemäß, enthaltend HA-I als Härter) mit 26,7 Vol.-% bestimmt. Bei den letztgenannten Materialien ist in der Normalatmosphäre (Luft) ein schnelles Selbstverlöschen zu erwarten.

**Tabelle 6: Ergebnisse der Kleinbrennertests (jeweils 5 Prüfkörper)**

| Beispiel (erfindungsgemäß) | Nachbrenndauer 1. Beflammung [s]* | Nachbrenndauer 2. Beflammung [s]* | Beobachtung^{#} |
|---|---|---|---|
| A (nein) | >180 / >180 / >180 / >180 / >180 | - / - / - / - / - | brennendes Abtropfen mit Entzündung der Watte und vollst. Abbrand |
| B (ja) | 16/5/5/15/5 | 207 / 32 / 2 / 28 / 109 | selbstverlöschend ohne Abfallen |
| C (nein) | 2 / >180 / >180 / 3 / >180 | >180 / - / - / >180 / - | brennendes Abtropfen mit Entzündung der Watte und vollst. Abbrand |
| D (ja) | 74 / 166 / >180 / 2 / 5 | >180 / - / - / 77 / 184 | teilweise brennendes Abfallen mit Entzündung der Watte und vollst. Abbrand, teilweise selbstverlöschend ohne Abfallen |

| | | | |
|---|---|---|---|
| * Angegeben sind jeweils die Ergebnisse der 5 einzelnen Prüfkörper. Eine zweite Beflammung erfolgt nur, wenn bei der ersten Beflammung ein Selbstverlöschen beobachtet wird. Bei vollständigem Abbrand ohne Selbstverlöschen wird als Wert für die Nachbrenndauer > 180 s notiert. ^{#} Die Beobachtungen beziehen sich auf den Zustand nach zwei Beflammungen. Wurde nur eine Beflammung durchgeführt, ist der danach vorliegende Zustand beschrieben. | | | |

Die Beflammungsversuche des Kleinbrennertests gemäß UL 94 V zeigen eine Verbesserung der Flammschutzwirkung bei Verwendung des erfindungsgemäßen Härters / Härtungsbeschleunigers HA-I anstelle des technisch üblichen Härters / Härtungsbeschleunigers HA. Sowohl für Beispiel A als auch Beispiel C (beide nicht erfindungsgemäß) beträgt die Nachbrenndauer in den Einzelversuchen überwiegend mehr als 180 s und es ist ein brennendes Abtropfen (mit Entzündung der darunterliegenden Watte) sowie ein vollständiger Abbrand der Prüfkörper zu beobachten. Für die Beispiele B und D (beide erfindungsgemäß, enthaltend HA-I als Härter bzw. Härtungsbeschleuniger) beträgt die Nachbrenndauer in den Einzelversuchen überwiegend weniger als 180 s, teilweise sogar deutlich weniger (Formulierung B). Die Prüfkörper der Formulierung B zeigen im Gegensatz zu Formulierung A ein Selbstverlöschen ohne Abtropfen oder Abfallen von Prüfkörperteilen. Für die Prüfkörper der Formulierung D wurde teilweise ein brennendes Abfallen (mit Entzündung der darunterliegenden Watte) und vollständigem Abbrand beobachtet, aber ein Teil der Prüfkörper zeigte auch ein Selbstverlöschen ohne Abtropfen oder Abfallen von Prüfkörperteilen. Im Vergleich zur analogen Formulierung C (enthaltend HA als Härtungsbeschleuniger) ist für die Formulierung D (enthaltend HA-I als Härtungsbeschleuniger) also auch eine verbesserte Flammschutzwirkung zu erkennen.

Zusammenfassend zeigen die Untersuchungen, dass die erfindungsgemäße Verbindung HA-I bei der Verwendung als alleiniger Härter oder als Härtungsbeschleuniger im Vergleich zum technisch üblichen Härter / Härtungsbeschleuniger HA, zu einer Verbesserung der Flammschutzwirkung innerhalb einer ansonsten vergleichbaren Epoxidharz-Zusammensetzung führt. Die Verwendung des erfindungsgemäßen Härters / Härtungsbeschleunigers HA-I in den Beispielen B bzw. D anstelle eines technisch üblichen Härters wie HA (Beispiele A bzw. C) innerhalb einer Epoxidharz-Zusammensetzung führt sowohl zur Verbesserung des Sauerstoff-Index, als auch zu einem verbesserten Brandverhalten im Kleinbrennertest. Auch für die Verbindungen HA-III (Beispiel E), HA-IV (Beispiel F) und HA-V (Beispiel G) wurde bei Verwendung als alleiniger Härter im Vergleich zum technisch üblichen Härter HA (Beispiel ein höherer Sauerstoff-Index bestimmt. So ist analog zur Verbindung HA-I (Beispiel D) eine verbesserte Flammschutzwirkung nachgewiesen.

### 6) Latenzen (Lagerstabilität)

Zur Ermittlung der Latenz (Lagerstabilität) werden ca. 20 g der jeweiligen Formulierung gemäß Tabelle 1 frisch zubereitet und danach bei einer Temperatur von 23 °C und einer relativen Feuchte von 50 % (Klimaschrank) gelagert. Durch regelmäßiges Messen der dynamischen Viskosität wird die fortschreitende Vernetzung (Härtung) der Formulierung unter diesen Lagerungsbedingungen erfasst. Die Bestimmung der dynamischen Viskosität erfolgt mit einem Haake-Viskosimeter [Kegel(1°)-Platte-Methode, Messung bei 25 °C, Scherrate 5,0 s⁻¹]. Eine Formulierung wird bis zur Verdopplung der Viskosität als lagerstabil (noch zur Verarbeitung geeignet) eingestuft.

**Tabelle 7: Ergebnisse der Prüfung der Lagerstabilität**

| Beispiel (erfindungsgemäß) | Zeit bis zur Verdopplung der dynamischen Viskosität [d] |
|---|---|
| A (nein) | 32 |
| B (ja) | 70 |
| C (nein) | 30 |
| D (ja) | 70 |
| E (ja) | 150 |
| F (ja) | > 80 |
| G (ja) | > 120 |
| H (ja) | > 60 |
| I (ja) | > 120 |
| J (ja) | 130 |
| K (ja) | > 80 |
| L (ja) | > 60 |

Die erfindungsgemäßen Formulierungen weisen mit mindestens 60 Tagen eine merklich höhere Lagerstabilität auf als die vergleichbaren, nicht erfindungsgemäßen Formulierungen mit einer Lagerstabilität von 32 Tagen (Formulierung A) bzw. 30 Tagen (Formulierung C).

Zusammenfassend zeigen die Versuche zur Lagerstabilität, dass mit den erfindungsgemäßen Verbindungen Formulierungen erhalten werden können, die im Vergleich zu Formulierungen, die man mit üblichen Härtern bzw. Härtungsbeschleunigern erhält, über eine deutlich bessere Lagerstabilität verfügen.

## Patentansprüche

1. Härter zur Härtung von Epoxidharzen umfassend mindestens eine Verbindung aus der Gruppe der Ester phosphorhaltiger Säuren gemäß Formel (I) 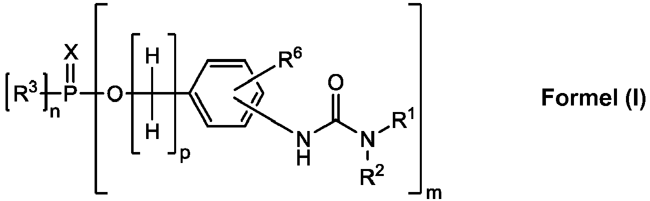 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2.

2. Härtungsbeschleuniger zur beschleunigten Härtung von Epoxidharzen umfassend mindestens eine Verbindung aus der Gruppe der Ester phosphorhaltiger Säuren gemäß Formel (I) 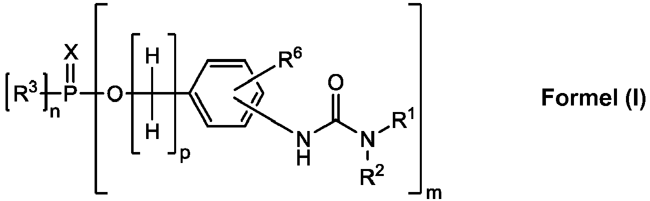 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2.

3. Härter gemäß Anspruch 1 oder Härtungsbeschleuniger gemäß Anspruch 2, **dadurch gekennzeichnet, dass** die Verbindung ausgewählt wird aus der Gruppe der Phosphorsäureester oder der Thiophosphorsäureester gemäß Formel (I), wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = -O-Aryl, -O-Alkylaryl oder -O-Arylalkyl,
R⁶ = Wasserstoff, Alkyl oder -NHC(O)NR¹R²,
X = Schwefel oder Sauerstoff,
m = 1, 2 oder 3,
n = 0, 1 oder 2, wobei gilt: m + n = 3
p = 0, 1 oder 2.

4. Härter gemäß Anspruch 1 oder Härtungsbeschleuniger gemäß Anspruch 2, **dadurch gekennzeichnet, dass** die Verbindung ausgewählt wird aus der Gruppe der Phosphonate oder der Thiophosphonate gemäß Formel (I), wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl oder Aryl,
R⁶ = Wasserstoff, Alkyl oder -NHC(O)NR¹R²,
X = Schwefel oder Sauerstoff,
m = 2,
n = 1,
p = 0, 1 oder 2.

5. Härter gemäß Anspruch 1 oder Härtungsbeschleuniger gemäß Anspruch 2, **dadurch gekennzeichnet, dass** die Verbindung ausgewählt wird aus der Gruppe der Phosphinate oder der Thiophosphinate gemäß Formel (I), wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl oder Aryl,
R⁶ = Wasserstoff, Alkyl oder -NHC(O)NR¹R²,
X = Schwefel oder Sauerstoff,
m = 1,
n = 2,
p = 0, 1 oder 2.

6. Härter oder Härtungsbeschleuniger gemäß mindestens einem der Ansprüche 1 bis 3 **dadurch gekennzeichnet, dass** für die Reste R¹, R², R³, R⁶, X und den Index p in Formel (I) gleichzeitig oder unabhängig voneinander gilt:
R¹, R² = gleichzeitig oder unabhängig voneinander Methyl oder Ethyl,
R³ = -O-Aryl,
R⁶ = Wasserstoff oder Alkyl,
X = Schwefel oder Sauerstoff,
p = 0.

7. Härter oder Härtungsbeschleuniger gemäß mindestens einem der Ansprüche 1, 2, 4 und 5 **dadurch gekennzeichnet, dass** für die Reste R¹, R², R³, R⁶, X und den Index p in Formel (I) gleichzeitig oder unabhängig voneinander gilt:
R¹, R² = gleichzeitig oder unabhängig voneinander Methyl oder Ethyl,
R³ = Aryl,
R⁶ = Wasserstoff oder Alkyl,
X = Schwefel oder Sauerstoff,
p = 0.

8. Härterzusammensetzung umfassend mindestens zwei verschiedene Härter und/oder Härtungsbeschleuniger, **dadurch gekennzeichnet, dass** die Härter und/oder Härtungsbeschleuniger mindestens eine Verbindung aus der Gruppe der Ester phosphorhaltiger Säuren gemäß Formel (I) 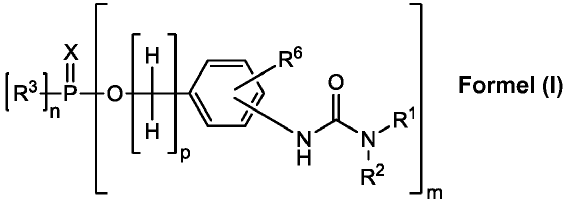 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2
umfassen.

9. Härterzusammensetzung umfassend
a) mindestens einen Härter zur Härtung von Epoxidharzen, der verschieden ist von einem Härter und einem Härtungsbeschleuniger umfassend mindestens eine Verbindung aus der Gruppe der Ester phosphorhaltiger Säuren gemäß Formel (I) 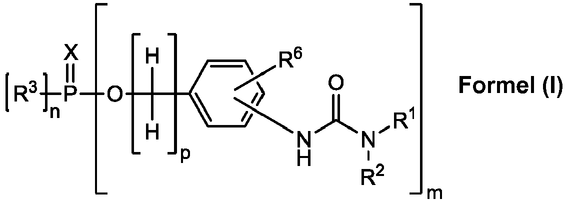 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2
und
b) mindestens einen Härtungsbeschleuniger umfassend mindestens eine Verbindung aus der Gruppe der Ester phosphorhaltiger Säuren gemäß Formel (I) 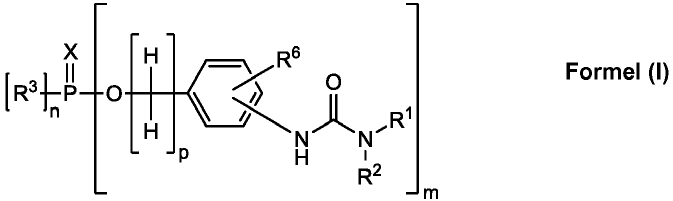 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2.

10. Epoxidharz-Zusammensetzung umfassend
a) mindestens ein Epoxidharz, und
b1) mindestens einen Härter umfassend mindestens eine Verbindung aus der Gruppe der Ester phosphorhaltiger Säuren gemäß Formel (I) 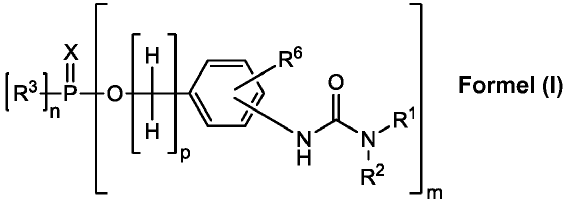 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2, oder
b2) mindestens einen Härtungsbeschleuniger umfassend mindestens eine Verbindung aus der Gruppe der Ester phosphorhaltiger Säuren gemäß Formel (I) 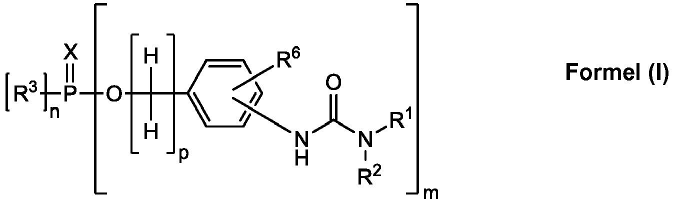 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2.

11. Composit-Material umfassend
a) ein Trägermaterial, und
b) mindestens ein Epoxidharz, und
c1) mindestens einen Härter umfassend mindestens eine Verbindung aus der Gruppe der Ester phosphorhaltiger Säuren gemäß Formel (I) 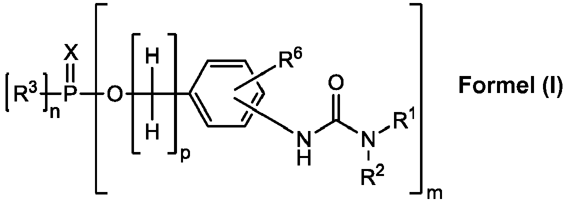 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2, oder
c2) mindestens einen Härtungsbeschleuniger umfassend mindestens eine Verbindung aus der Gruppe der Ester phosphorhaltiger Säuren gemäß Formel (I) 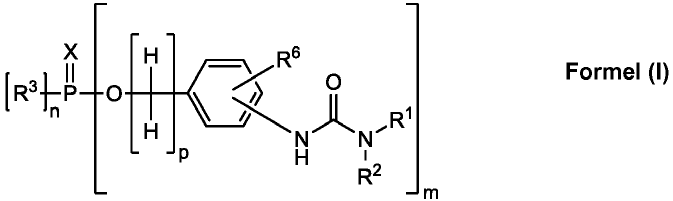 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2.

12. Verwendung eines Härters umfassend mindestens eine Verbindung aus der Gruppe der Ester phosphorhaltiger Säuren gemäß Formel (I) 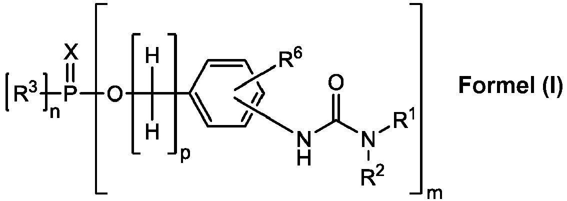 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2 oder eines Härtungsbeschleunigers umfassend mindestens eine Verbindung aus der Gruppe der Ester phosphorhaltiger Säuren gemäß Formel (I) 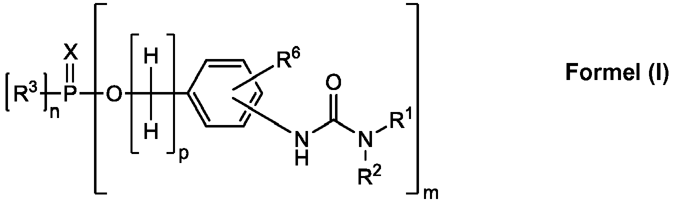 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p= 0, 1 oder 2, als
a) Härter zur Härtung von Prepregs, Laminaten, Beschichtungen, Polymerharzgemischen, Pulverlacken, Vergussmassen oder Klebstoffen, jeweils umfassend mindestens ein Epoxidharz, und/oder
b) Härtungsbeschleuniger zur beschleunigten Härtung von Prepregs, Laminaten, Beschichtungen, Polymerharzgemischen, Pulverlacken, Vergussmassen oder Klebstoffen, jeweils umfassend mindestens ein Epoxidharz, und/oder
c) Flammschutzmittel in Epoxidharzen, oder in Pulverlacken, Vergussmassen, Klebstoffen oder gehärteten Formmassen umfassend jeweils mindestens ein Epoxidharz.

13. Verwendung eines Härters umfassend mindestens eine Verbindung aus der Gruppe der Ester phosphorhaltiger Säuren gemäß Formel (I) 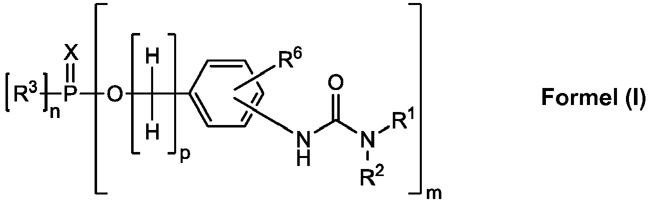 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2,
zur Härtung von Epoxidharzen.

14. Verwendung eines Härtungsbeschleunigers umfassend mindestens eine Verbindung aus der Gruppe der Ester phosphorhaltiger Säuren gemäß Formel (I) 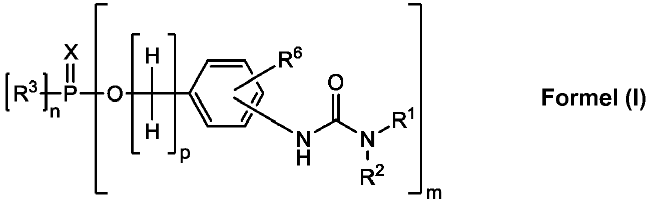 wobei für die Reste R¹, R², R³, R⁶, X und Indizes m, n, p gleichzeitig oder unabhängig voneinander gilt:
R¹, R² = gleichzeitig oder unabhängig voneinander Alkyl,
R³ = Alkyl, Aryl, -O-Alkyl, -O-Aryl, -O-Alkylaryl oder -O-Arylalkyl,
R⁶ = Wasserstoff, Alkyl oder -NHC(O)NR¹R²,
X = Sauerstoff oder Schwefel,
m = 1, 2 oder 3,
n = 0, 1 oder 2, wobei gilt: m + n = 3
p = 0, 1 oder 2
zur beschleunigten Härtung von Epoxidharzen.

15. Verwendung eines Härters oder eines Härtungsbeschleunigers nach einem der Ansprüche 12, 13 oder 14,
**dadurch gekennzeichnet, dass** der Härter oder Härtungsbeschleuniger eine Verbindung aus der Gruppe der Ester phosphorhaltiger Säuren gemäß Formel (I) ist, wie in mindestens einem der Ansprüche 3 bis 7 definiert.

## Claims

1. Curing agent for curing epoxy resins comprising at least one compound from the group of esters of phosphorus-containing acids according to formula (I) 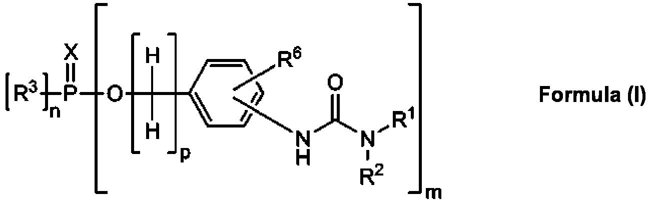 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2.

2. Curing accelerator for accelerated curing of epoxy resins comprising at least one compound from the group of esters of phosphorus-containing acids according to formula (I) 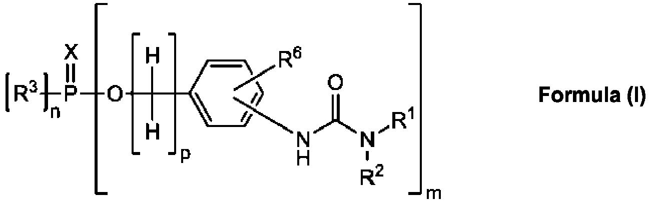 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2.

3. Curing agent according to claim 1 or curing accelerator according to claim 2, **characterised in that** the compound is selected from the group of phosphoric acid esters or thiophosphoric acid esters according to formula (I), in which the following applies to the functional groups R¹, R², R³, R⁶, X and indices m, n, p, simultaneously or independently of one another:
R¹, R² = alkyl, simultaneously or independently of one another,
R³ = -O-aryl, -O-alkylaryl or -O-arylalkyl,
R⁶ = hydrogen, alkyl or -NHC(O)NR¹R²,
X = sulfur or oxygen,
m = 1, 2 or 3,
n = 0, 1 or 2, where: m + n = 3
p = 0, 1 or 2.

4. Curing agent according to claim 1 or curing accelerator according to claim 2, **characterised in that** the compound is selected from the group of phosphonates or thiophosphonates according to formula (I), in which the following applies to the functional groups R¹, R², R³, R⁶, X and indices m, n, p, simultaneously or independently of one another:
R¹, R² = alkyl, simultaneously or independently of one another,
R³ = alkyl or aryl,
R⁶ = hydrogen, alkyl or -NHC(O)NR¹R²,
X = sulfur or oxygen,
m = 2,
n = 1,
p = 0, 1 or 2.

5. Curing agent according to claim 1 or curing accelerator according to claim 2, **characterised in that** the compound is selected from the group of phosphinates or thiophosphinates according to formula (I), in which the following applies to the functional groups R¹, R², R³, R⁶, X and indices m, n, p, simultaneously or independently of one another:
R¹, R² = alkyl, simultaneously or independently of one another, R³ = alkyl or aryl,
R⁶ = hydrogen, alkyl or -NHC(O)NR¹R²,
X = sulfur or oxygen,
m = 1,
n = 2,
p = 0, 1 or 2.

6. Curing agent or curing accelerator according to at least one of claims 1 to 3, **characterised in that** the following applies to the functional groups R¹, R², R³, R⁶, X and the index p in formula (I), simultaneously or independently of one another:
R¹, R² = methyl or ethyl, simultaneously or independently of one another,
R³ = -O-aryl,
R⁶ = hydrogen or alkyl,
X = sulfur or oxygen,
p = 0.

7. Curing agent or curing accelerator according to at least one of claims 1, 2, 4 and 5, **characterised in that** the following applies to the functional groups R¹, R², R³, R⁶, X and the index p in formula (I), simultaneously or independently of one another:
R¹, R² = methyl or ethyl, simultaneously or independently of one another,
R³ = aryl,
R⁶ = hydrogen or alkyl,
X = sulfur or oxygen,
p = 0.

8. Curing agent composition comprising at least two different curing agents and/or curing accelerators, **characterised in that** the curing agents and/or curing accelerators comprise at least one compound from the group of esters of phosphorus-containing acids according to formula (I) 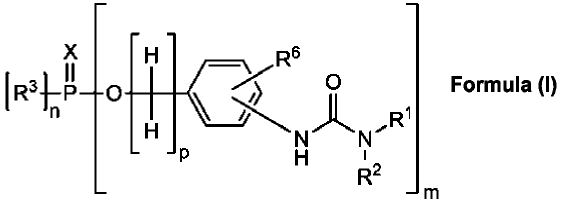 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2.

9. Curing agent composition comprising
a) at least one curing agent for curing epoxy resins, which curing agent is different from a curing agent and a curing accelerator comprising at least one compound from the group of esters of phosphorus-containing acids according to formula (I) 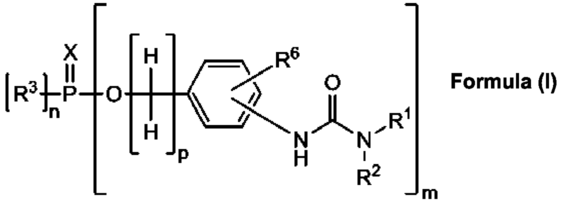 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2
and
b) at least one curing accelerator comprising at least one compound from the group of esters of phosphorus-containing acids according to formula (I) 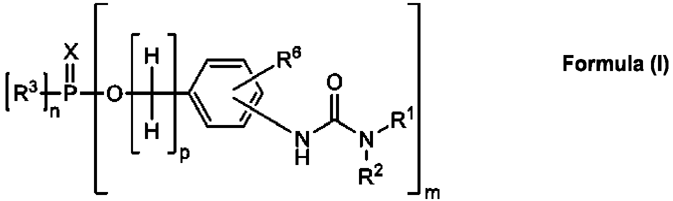 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2.

10. Epoxy resin composition, comprising
a) at least one epoxy resin, and
b1) at least one curing agent comprising at least one compound from the group of esters of phosphorus-containing acids according to formula (I) 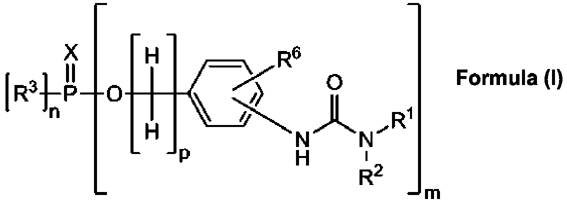 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2, or
b2) at least one curing accelerator comprising at least one compound from the group of esters of phosphorus-containing acids according to formula (I) 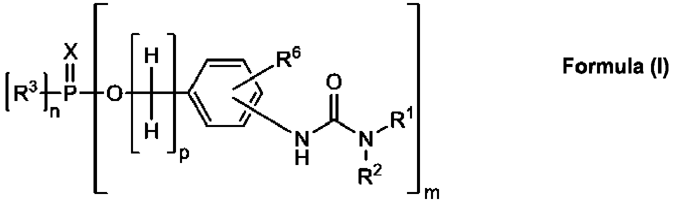 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2.

11. Composite material comprising
a) a carrier material, and
b) at least one epoxy resin, and
c1) at least one curing agent comprising at least one compound from the group of esters of phosphorus-containing acids according to formula (I) 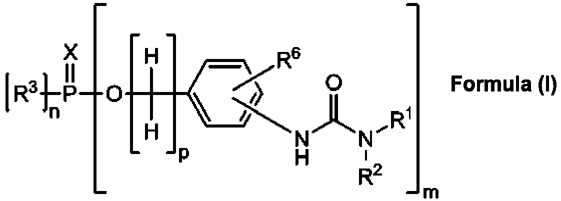 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2, or
c2) at least one curing accelerator comprising at least one compound from the group of esters of phosphorus-containing acids according to formula (I) 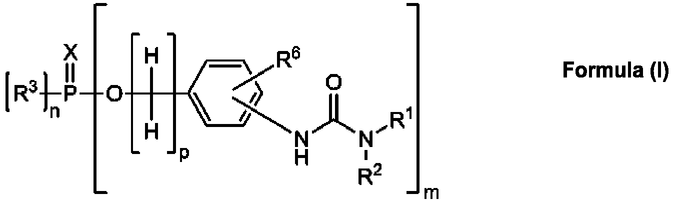 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2.

12. Use of a curing agent comprising at least one compound from the group of esters of phosphorus-containing acids according to formula (I) 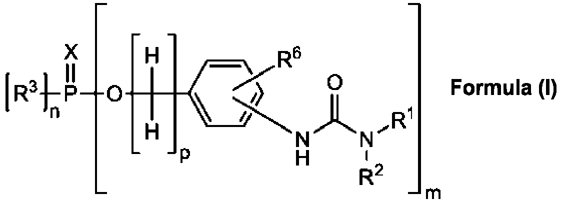 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2, or of a curing accelerator comprising at least one compound from the group of esters of phosphorus-containing acids according to formula (I) 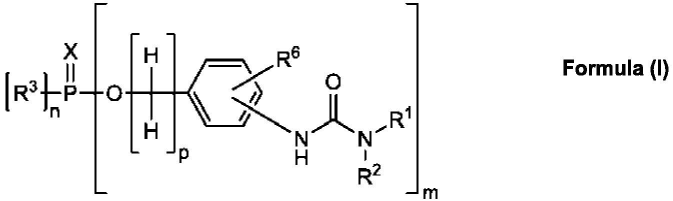 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2, as
a) a curing agent for curing of prepregs, laminates, coatings, polymer resin mixtures, powder coatings, casting compounds or adhesives, each comprising at least one epoxy resin, and/or
b) a curing accelerator for accelerated curing of prepregs, laminates, coatings, polymer resin mixtures, powder coatings, casting compounds or adhesives, each comprising at least one epoxy resin, and/or
c) a flame retardant in epoxy resins, or in powder coatings, casting compounds, adhesives or cured moulding compounds, each comprising at least one epoxy resin.

13. Use of a curing agent comprising at least one compound from the group of esters of phosphorus-containing acids according to formula (I) 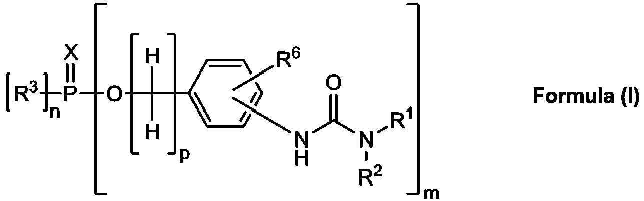 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2,
for curing epoxy resins.

14. Use of a curing accelerator comprising at least one compound from the group of esters of phosphorus-containing acids according to formula (I) 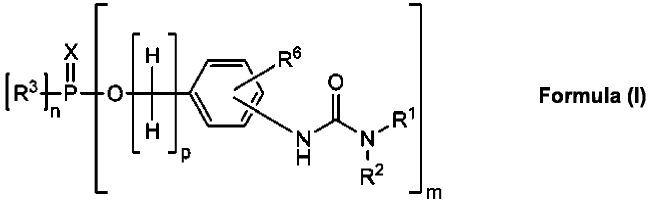 in which the following applies to the functional groups R¹, R², R³, R⁶, X and indices m, n, p, simultaneously or independently of one another:
R¹, R² = alkyl, simultaneously or independently of one another,
R³ = alkyl, aryl, -O-alkyl, -O-aryl, -O-alkylaryl or -O-arylalkyl,
R⁶ = hydrogen, alkyl or -NHC(O)NR¹R²,
X = oxygen or sulfur,
m = 1, 2 or 3,
n = 0, 1 or 2, where: m + n = 3
p = 0, 1 or 2
for accelerated curing of epoxy resins.

15. Use of a curing agent or a curing accelerator according to any of claims 12, 13 or 14, **characterised in that** the curing agent or curing accelerator is a compound from the group of esters of phosphorus-containing acids according to formula (I), as defined in at least one of claims 3 to 7.

## Revendications

1. Agent de durcissement pour durcir des résines époxy, comprenant au moins un composé du groupe des esters d'acides phosphoriques de formule (I) 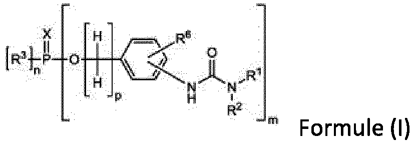 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2.

2. Accélérateur de durcissement pour un durcissement accéléré des résines époxy, comprenant au moins un composé du groupe des esters d'acides phosphoriques de formule (I) 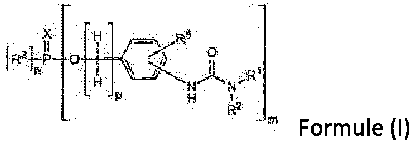 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2.

3. Agent de durcissement selon la revendication 1 ou accélérateur de durcissement selon la revendication 2, **caractérisé en ce que** le composé est choisi dans le groupe des esters d'acide phosphorique ou des esters d'acide thiophosphorique selon la formule (I), où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = -O-aryle, -O-alkylaryle ou -O-arylalkyle
R⁶ = hydrogène, alkyle ou -NHC(O)NR¹R²,
X = soufre ou oxygène,
m = 1, 2 ou 3,
n = 0,1 ou 2, avec : m + n = 3
p = 0, 1 ou 2.

4. Agent de durcissement selon la revendication 1 ou accélérateur de durcissement selon la revendication 2, **caractérisé en ce que** le composé est choisi dans le groupe des phosphonates ou des thiophosphonates selon la formule (I), où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle ou aryle,
R⁶ = hydrogène, alkyle ou -NHC(O)NR¹R²,
X = soufre ou oxygène,
m = 2,
n = 1,
p = 0, 1 ou 2.

5. Agent de durcissement selon la revendication 1 ou accélérateur de durcissement selon la revendication 2, **caractérisé en ce que** le composé est choisi dans le groupe des phosphinates ou des thiophosphinates selon la formule (I), où ce qui suit s'applique aux radicaux R¹, R², R³, R⁶X et les indices m, n, p simultanément ou indépendamment :
R¹, R² = alkyle simultanément ou indépendamment l'un de l'autre,
R³ = alkyle ou aryle,
R⁶ = hydrogène, alkyle ou -NHC(O)NR¹R²,
X = soufre ou oxygène,
m = 2,
n = 1,
p = 0, 1 ou 2.

6. Agent de durcissement ou accélérateur de durcissement selon au moins une des revendications 1 à 3, **caractérisé en ce que** ce qui suit s'applique aux radicaux R¹, R², R³, R⁶, X et l'index p dans la formule (I) simultanément ou indépendamment :
R¹, R² = méthyle ou éthyle simultanément ou indépendamment l'un de l'autre,
R³ = -O-aryle,
R⁶ = hydrogène ou alkyle,
X = soufre ou oxygène,
p = 0.

7. Agent de durcissement ou accélérateur de durcissement selon au moins une des revendications 1, 2, 4 et 5, **caractérisé en ce que** ce qui suit s'applique aux radicaux R¹, R², R³, R⁶, X et l'index p dans la formule (I) simultanément ou indépendamment :
R¹, R² = méthyle ou éthyle simultanément ou indépendamment l'un de l'autre,
R³ = aryle,
R⁶ = hydrogène ou alkyle,
X = soufre ou oxygène,
p = 0.

8. Composition d'agents de durcissement, comprenant au moins deux agents de durcissement différents et/ou des accélérateurs de durcissement, **caractérisé en ce que** les agents de durcissement et/ou accélérateurs de durcissement, comprennent au moins un composé du groupe des esters d'acides phosphoriques selon la formule (I) 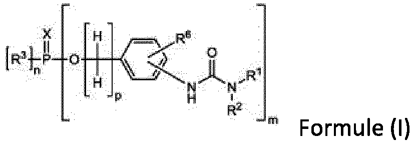 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle,
R⁶ = hydrogène, alkyle ou -NHC(O)NR¹R²,
X = soufre ou oxygène,
m = 1, 2 ou 3,
n = 0,1 ou 2, avec : m + n = 3
p = 0, 1 ou 2.

9. Composition d'agents de durcissement, comprenant
a) au moins un agent de durcissement pour durcir des résines époxy qui est différent d'un agent de durcissement et un accélérateur de durcissement comprenant au moins un composé du groupe des esters d'acides phosphoriques de formule (I) 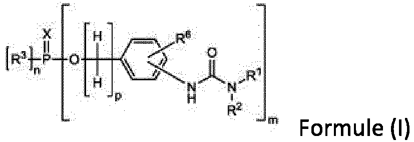 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2
et
b) au moins un accélérateur de durcissement, comprenant au moins un composé du groupe des esters d'acides phosphoriques de formule (I) 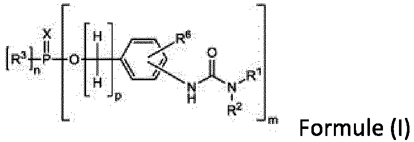 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2.

10. Composition de résine époxy, comprenant
a) au moins une résine époxy; et
b1) au moins un agent de durcissement comprenant au moins un composé du groupe des esters d'acides phosphoriques de formule (I) 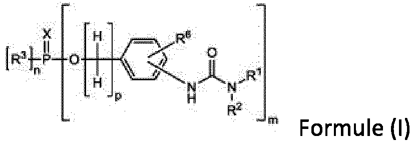 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2,
ou
b2) au moins un accélérateur de durcissement comprenant au moins un composé du groupe des esters d'acides phosphoriques de formule (I) 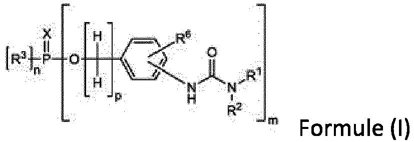 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2.

11. Matériau composite, comprenant
a) un matériau de support ; et
b) au moins une résine époxy; et
c1) au moins un agent de durcissement comprenant au moins un composé du groupe des esters d'acides phosphoriques de formule (I) 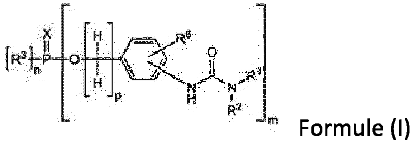 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2,
ou
c2) au moins un accélérateur de durcissement comprenant au moins un composé du groupe des esters d'acides phosphoriques de formule (I) 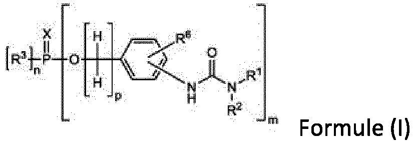 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2.

12. Utilisation d'un agent de durcissement, comprenant au moins un composé du groupe des esters d'acides phosphoriques de formule (I) 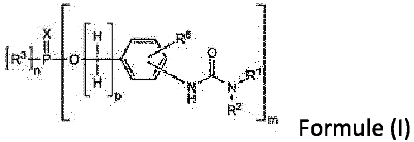 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2,
ou d'un accélérateur de polymérisation comprenant au moins un composé du groupe des esters d'acides phosphoriques de Formule (I) 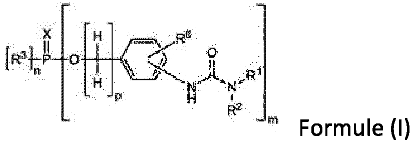 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2 en tant que
a) agents de durcissement pour le durcissement des préimprégnés, des laminés, des revêtements, des mélanges de résines polymères, des revêtements en poudre, des composés de coulée ou adhésifs, comprenant chacune au moins une résine époxy, et/ou
b) accélérateurs de durcissement pour le durcissement des préimprégnés, des laminés, des revêtements, des mélanges de résines polymères, des revêtements en poudre, des composés de coulée ou adhésifs, comprenant chacune au moins une résine époxy, et/ou
c) les retardateurs de flamme dans les résines époxy, ou dans les revêtements en poudre, les composés de coulée, les adhésifs ou les composés de moulage durcis comprenant chacun au moins un résine époxy.

13. Utilisation d'un agent de durcissement, comprenant au moins un composé du groupe des esters d'acides phosphoriques de formule (I) 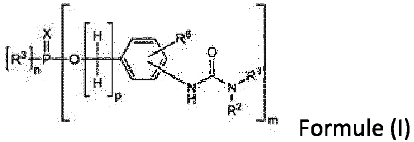 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2,
pour le durcissement de résines époxy.

14. Utilisation d'un accélérateur de durcissement, comprenant au moins un composé du groupe des esters d'acides phosphoriques de formule (I) 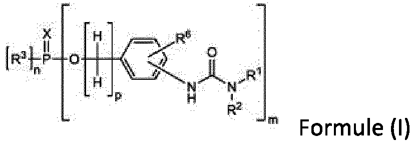 où ce qui suit s'applique aux radicaux R¹, R², R³, R⁶, X et les indices m, n, p simultanément ou indépendamment :
R¹, R² = alkyle simultanément ou indépendamment l'un de l'autre,
R³ = alkyle, aryle, -O-alkyle, -O-aryle, -O-alkylaryle ou -O-arylalkyle
R⁶ = hydrogène, alkyle ou -NHC(O)NR¹R²,
X = oxygène ou soufre,
m = 1, 2 ou 3,
n = 0,1 ou 2, avec : m + n = 3
p = 0, 1 ou 2,
pour le durcissement accéléré de résines époxy.

15. Utilisation d'un agent de durcissement ou d'un accélérateur de durcissement selon une des revendications 12, 13 ou 14,
**caractérisé en ce que** l'agent de durcissement ou l'accélérateur de durcissement est un composé du groupe des esters d'acides phosphoriques de formule (I), comme défini dans au moins une des revendications 3 à 7.
